# EUROPEAN PATENT APPLICATION

(11) **EP 4 745 806 A1**
(43) Date of publication of application: **20.05.2026**
(21) Application number: 25216235.9
(22) Date of filing: 17.11.2025
(51) Int. Cl.: G06F 21/10, G06F 21/64, H04L 9/32, H04L 9/00, G06F 21/31

(54) **SYSTEM AND METHOD FOR CONTENT PROTECTION PLATFORM WITH PERSONAL CRYPTO ID**

(30) Priority: 18.11.2024 US 202463721646 P
(71) Applicant: Bellevue Investments GmbH & Co. KGaA, 10589 Berlin (DE)
(72) Inventor: Rein, Dieter, 10589 Berlin (DE); Jaron, Jürgen, 10589 Berlin (DE)

(57) **Abstract**

According to one embodiment, there is presented herein a method of licensing, authenticating, and time stamping transactions associated with stored a digital media item. According to a first embodiment, there is provided a method of storing licensing terms in a blockchain token, which terms can be retrieved from the token and examined by someone interested in licensing the item. In still another variation there is provided a method of memorializing changes to a digital item as it undergoes reviews by creating a time stamp associated with each change and storing that in a blockchain token.

## Description

This application claims the benefit of U.S. Provisional Patent Application serial number 63/721,646 filed on November 18, 2024, and incorporates said provisional application by reference into this document as if fully set out at this point.

### TECHNICAL FIELD

The instant invention relates to a system and method of providing protection and a method of determining the authenticity of digital media content such as photo, audio material and videos. This protection is implemented by uniquely characterizing the personal content and providing options to distinguish that content from content generated by artificial intelligence.

### BACKGROUND

In the digital age, especially in view of the highly sophisticated generative AI technologies, forged, manipulated or even completely artificially generated media content is almost indistinguishable at times from human-created content. It is not surprising that a need has arisen for a method of determining and verifying the authenticity of digital content, thereby simultaneously protecting the rights of the original authors.

The need for the technological discussed herein has been motivated in part by the following developments:

### - Prolific distribution and availability of digital content:

With modern smartphones, digital cameras and easily accessible software tools user can within seconds generate photos, videos and audio files and distribute it worldwide.

### - The development of advanced generative AI:

AI-systems allow users to generate realistic photos, voices or film sequences. With this technology it is possible to create portraits that are based on existing persons, with small deviations, and it is even possible to generate completely synthetic faces that appear to be real. Voice imitation and artificially generated music is a technical possibility utilizing this same AI technology.

### - Lack of reliable proof of authenticity:

Because of the ready availability of editing tools, a reliable form of verifying if a particular recording or piece of digital data is indeed from a specific person has become increasingly difficult to establish. Additionally, very often what is missing is a clearly defined mechanism for verifying the access rights in terms of re-use and publication.

The foregoing developments have contributed to the following issues:

### - Uncertainty about the origin of the digital data:

How is it possible for a third-party (e.g. journalist or a service provider) to determine if a photo or a voice recording is actually from the specified content creator or speaker?

### - Uncertainty regarding the rights and risk of confusion:

Who is responsible when false content is generated which purports to contain images, video, or audio recordings of a real person? Additionally, who is responsible, when digital data is being utilized in multiple ways without the knowledge and consent of that person or, if the content is an original work by an individual, without the consent of the author?

There have been many attempts to address these problems. However, the proposed solutions may work for one scenario (e.g., copyright protection) but fail in others (e.g., identifying many approaches that are directed in that particular area, however these solutions only cover a part of the mentioned problems.

### - Digital watermarks:

Digital watermarks embed a barely noticeable (visual or audio) pattern in a digital image or audio file, that is designed to allow the work to be tracked and identified if it is reused. However, a digital watermark can be removed or made unidentifiable with careful editing or distortion. Additionally, a digital watermark does not provide an automatic interface for license management.

### - Manual signatures:

Multiple social media platforms provide allow a person to upload a digital image and authenticate the authorship with a notification from the person with one-click. This approach however does not provide a form of reliable protection because no cryptographic mechanisms are utilized.

### - File-hashing without context:

Some social media providers and platforms calculate a hash-value (via MD5 or SHA-256) for a digital file. This hash-value can be utilized to determine if that particular digital file is used multiple time. This approach however does not verify the identity of the author and additionally this approach is missing an integrated rights administration.

In short, none of the above-mentioned methods combine personal, unique identities, unambiguous signatures as well as automatic sharing processes in one coherent system in which every user role - ranging from private persons and media companies - is being clearly structured.

Heretofore, as is well known in the media editing industry, there has been a need for an invention to address and solve the above-described problems. Accordingly, it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or embodiments) shown and described. This is so because those skilled in the art to which the invention pertains will be able to devise other forms of this invention within the ambit of the appended claims.

### SUMMARY OF THE INVENTION

The instant invention is designed to address the above-described problems and provides a holistic solution that, on one hand, allows it to designate personal, original content generated by humans and on the other hand provide a secure administration of user rights with a licensing system. In this invention the requesting person or institution (e.g. an agency, a publisher or an individual) is in constant contact with the proprietor of the access rights (meaning that person who owns the crypto-ID and the right to sign its works). The invention, without the listed integrated additional functions (especially blockchain-aspects, API-enhancements or contextual controls) is directed to provide a robust, but nevertheless a practicable infrastructure that provides high security and clear and transparent processes.

Various embodiments of the instant invention are directed toward remedying the above described problems by providing an integrated construct that provides (1) a personal crypto-ID for each user, wherein the crypto-ID is bound to the person who created it with high value of certainty, (2) a means for unambiguously associating content (images, videos and audio) by signing the content with the crypto-ID of the rights owner, (3) a process allows third parties to request access to a work, which request the creator can easily confirm or deny and specify all information about runtimes, compensation and scale of usage, and (4) a method for impeding abuse, because a forgery or unauthorized use can be detected and documented very quickly.

The instant invention can be extended by additional mechanisms - the initial approach provides the basis functionality in the foreground: person, ID, mediums and license generation without the addition of specific functionalities as blockchain or API-automation.

Also, disclosed herein is a system, that is provided as a first embodiment as a central platform that is set up in a two- or three-part structure. A first component is the user management aspect, wherein a person connects to the system and enters personal information. This person will also then also be required to specifically authenticate itself within the system. This authentication can be implemented by requiring the user to provide official ID information, utilize video-identification procedures or by presentation of official documents. By providing this information to the system the system generates a personal, cryptographic based ID - the crypto-ID.

A second aspect involves content processing, wherein the content is being provided to the system by the user of the system. Every content that the user provides is associated with the user-based crypto-ID, wherein this association means that the content will be digitally signed with that crypto-ID. This approach makes a clear record of the creator of the content.

The third aspect of the system is a licensing and distribution methodology, wherein the distribution is connected to an approval or disapproval process regarding content access. Interested third-parties (e.g. agencies, companies or media professionals) are able to request access to content utilizing the platform and the creator will approve or deny the request. In case of approval the instant invention will generate a case specific license file, that contains a plurality of parameters with associated data values. Parameters might comprise run time, geographical range and application type.

The instant invention builds a bridge between technical signing on one side and practical rights management on the other side, wherein the approach of the instant invention is not limited to advanced technologies (e.g. blockchain).

It should be clear that an approach such as this would be a tremendous aid not only to the user who is protecting their personal rights by giving an opportunity to unambiguously authenticate audio, video or photo material of that user, but also allows content generators to produce content whose authenticity can also be unambiguously verified. The user who owns the rights can individually, on request by content generators, define the use of the personally owned and authenticated multimedia content being it video, audio or photo and also users being provided with the generated content can quickly and easily verify if the content is authentic and originally from the user.

The instant invention additionally provides a number of advantages compared to prior art approaches by providing a way to efficiently administer rights associated with digital content, wherein previously utilized complex contracts are substituted by clear, standardized licensing agreements. The complete process is reproduced digitally, without the need for elaborate communication and negotiations utilizing emails, pdf documents or telephone calls or even meetings in person. With the cryptographic signature it is always possible to prove the authenticity of the original document, thereby making sure that the source is the actual content owner and not an untrusted source. The hash-based approach to processing digital content provides safety to the digital content in terms of manipulations - if parts of the content would be changed or manipulated in any way the hash value would be changed and the system of the instant invention can determine if the content is still original or not. The approach therefore elevates trust in the market of digital content provision, because the system guarantees that no one accidentally takes part in copy right infringement.

The foregoing has outlined in broad terms some of the more important features of the invention disclosed herein, so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather, the invention is capable of other embodiments and of beig practices and carried out in various other ways not specifically enumerated herein. Finally, it should be understood that the phraseology and terminology employed herein are for the purpose of description and should not be regarded as limiting, unless the specification specifically so limits the invention.

### BRIEF DESCRIPTION OF THE DRAWINGS

These and further aspect of the invention are described in detail in the following examples and accompanying drawings.
Fig 1 is an illustration showing the general environment of the invention.
Fig 2 illustrates the general structure of the platform of the instant invention
Fig. 3 discloses a preferred workflow of the instant invention when processing media items.
Fig. 4 illustrates the general approach of the instant invention when generating the signature of the media items.
Fig. 5 discloses the individual functionality of the license management.
Fig. 6 is illustrating the contents of the license document of the instant invention.
Fig. 7 discloses the setup of the crypto-ID according to the instant invention.
Fig. 8 discloses a list of the potential groups of users participating utilizing the instant invention.
Fig. 9 is illustrating the functionalities associated with the groups of users of the instant invention.
Fig. 10 discloses the workflow of the instant invention in more detail.
Fig. 11 is further disclosing the upload process of the instant invention in more detail.
Fig. 12 is intended to disclose the control mechanisms being integrated into the functionality of the instant invention.
Fig. 13 is illustrating the clearance and approval system of media processing of the instant invention.
Fig. 14 discloses the multiple participants sharing media items according to the instant invention.
Fig. 15 illustrates the security measures of the instant invention.
Fig. 16 discloses the transparency measures of the instant invention.
Fig. 17 discloses in more detail the setup of the platform of the instant invention.
Fig. 18 illustrates the setup of the crypto-ID in more detail.
Fig. 19 discloses the workflow of the instant invention more detail.
Fig. 20 illustrates the license management functionality of the instant invention in more detail.
Fig. 21 discloses the system architecture of the instant invention.

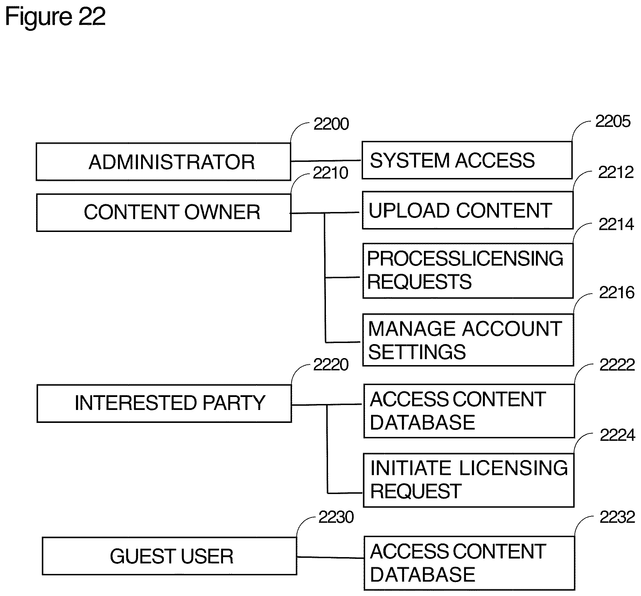

Fig. 22 illustrates the user roles participating in the instant invention in more detail.
Fig. 23 discloses the utilization of the instant invention in different industries.
Fig. 24 illustrates a potential usage example of the functionality of the instant invention.
Fig. 25 discloses the groups of users of the instant invention and potential benefits.
Fig. 26 illustrates the of integration of blockchain technology into the instant invention.
Fig. 27 discloses the advantages of blockchain integration according to the instant invention.
Fig. 28 illustrates the workflow of the blockchain integration of the instant invention.
Fig. 29 discloses the potential blockchain variants utilized by the instant invention.
Fig. 30 discloses the workflow of the integration of the blockchain technology into the instant invention.
Fig. 31 illustrates the smart contract idea introduced by the instant invention.
Fig. 32 discloses the workflow of the blockchain integration in more detail.
Fig. 33 illustrates a licensing transaction with blockchain integration according to the instant invention.
Fig. 34 discloses the smart contract concept in more detail.

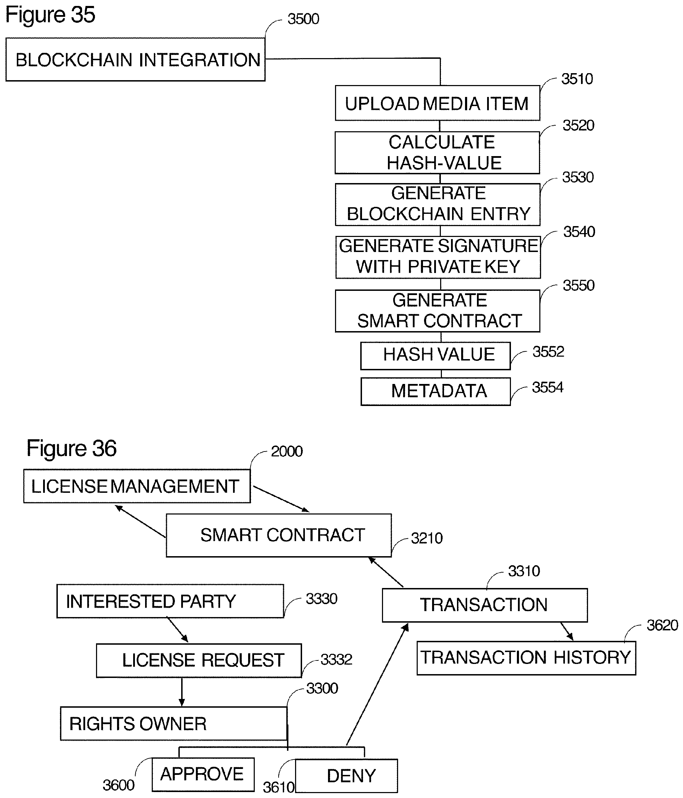

Fig. 35 illustrates the individual steps of the blockchain integration in the instant invention in more detail.
Fig. 36 discloses the licensing approach utilizing blockchain technology in the instant invention.
Fig. 37 illustrates the advantages of the blockchain integration according to the instant invention.
Fig. 38 discloses the storage approach when utilizing blockchain technology according to the instant invention.
Fig. 39 illustrates the security approach when utilizing blockchain technology.
Fig. 40 discloses the synchronization strategy when utilizing blockchain technology.
Fig. 41 illustrates approaches of the instant invention protecting the integrity of the blockchain integration.
Fig. 42 discloses the multiple added user roles when integrating blockchain technology.
Fig. 43 illustrates the performance and scalability measures when integrating blockchain technology.
Fig. 44 discloses the upload processes when providing media items after blockchain integration according to the instant invention.
Fig. 45 illustrates the smart contract functionality when utilizing multi-party ownership according to the instant invention.
Fig. 46 is disclosing the integration of the modular programming interface according to the instant invention.
Fig. 47 illustrates the implementation steps when utilizing the modular programming interface.
Fig. 48 discloses the functionality of the modular programming interface integration for multiple participants according to the instant invention.
Fig. 49 illustrates the functionality of the programming interface according to the instant invention.
Fig. 50 discloses the security measures of the modular programming interface integration.
Fig. 51 illustrates the list of endpoints provided by the modular programming interface integration of the instant invention.
Fig. 52 discloses the functionalities of the modular programming interface integration for external platforms.
Fig. 53 illustrates the audit system introduced by integration of the modular programming interface.
Fig. 54 discloses the reference architecture of the modular programming interface integration of the instant invention.
Fig. 55 illustrates the functionality of the modular programming interface integration for media agencies.
Fig. 56 discloses the functionality of the modular programming interface integration for social networks and video portals.
Fig. 57 discloses the functionality of the modular programming interface integration for publishing companies.
Fig. 58 illustrates the version management functionality introduced by the integration of the modular programming interface into the instant invention.
Fig. 59 discloses the functionality of the modular programming interface in more detail.
Fig. 60 illustrates the functionality of the integration of the modular programming interface in more detail.
Fig. 61 discloses the contextual sharing approach integrated into the instant invention.
Fig. 62 illustrates the categorization of the utilization of the contextual sharing approach.
Fig. 63 discloses the specific rules selectable by a rights owner according to the instant invention.
Fig. 64 illustrates the workflow of the contextual sharing approach.
Fig. 65 discloses the control mechanisms introduced when utilizing the contextual sharing approach.
Fig. 66 illustrates the communication layer introduced by the integration of the contextual sharing approach.
Fig. 67 discloses the enhancements to the database structure when integrating the contextual sharing approach.
Fig. 68 illustrates the specific role adaptations of the instant invention when utilizing the contextual sharing approach.
Fig. 69 discloses the base system of the instant invention when integrating the contextual sharing approach.
Fig. 70 illustrates the workflow of contextual sharing uploading content.
Fig. 71 discloses the workflow of contextual sharing when processing license requests.
Fig. 72 illustrates the conflict processing of the contextual sharing integration.
Fig. 73 discloses some enhancements to the database structure when integrating the contextual sharing approach in more detail.

### DETAILED DESCRIPTION

While this invention is susceptible of embodiment in many different forms, there is shown in the drawings, and will be described hereinafter in detail, some specific embodiments of the instant invention. It should be understood, however, that the present disclosure is to be considered an exemplification of the principles of the invention and is not intended to limit the invention to the specific embodiments or algorithms so described.

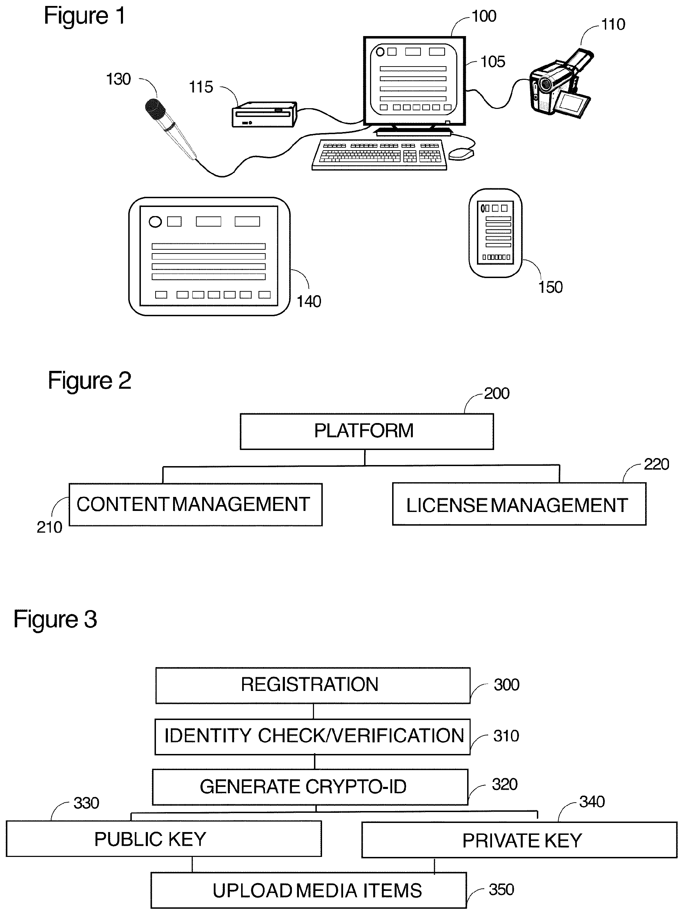

As is generally indicated in Fig.1, at least a portion of the instant invention will be implemented in form of software **105** running on a user's computer **100** or another device with a CPU such as a tablet computer, smart phone, etc. For purposes of the instant disclosure, the word "computer" or CPU will be used generically to refer to any programmable device such as those listed in the previous sentence. Such a computer will have some amount of program memory and storage (whether internal or accessible via a network) as is conventionally utilized by such units. Additionally, it is possible that an external camera **110** of some sort will be utilized with - and will preferably be connectible to the computer so that video and/or graphic information can be transferred to and from the computer. Preferably the camera **110** will be a digital video camera, although that is not a requirement, as it is contemplated that the user might wish to utilize still images from a digital still camera in the creation of his or her multimedia work. Further given the modern trend toward incorporation of cameras into other electronic components (e.g., in handheld computers, telephones, laptops, etc.). Those of ordinary skill in the art will recognize that the camera might be integrated into the computer or some other electronic device and, thus, might not be a traditional single-purposes video or still camera.

Although the camera will preferably be digital in nature, any sort of camera might be used, provided that the proper interfacing between it and the computer is utilized. Additionally, a microphone **130** might be utilized so that the user can add voice-over narration to a multimedia work and a digital media burning device **115** could be useful for storing in-progress or completed works. Further, it might also be possible and is shown in Fig.1 that the process of the instant invention might be implemented on portable tablet computer devices **140** or on mobile devices, such as smart phones **150.**

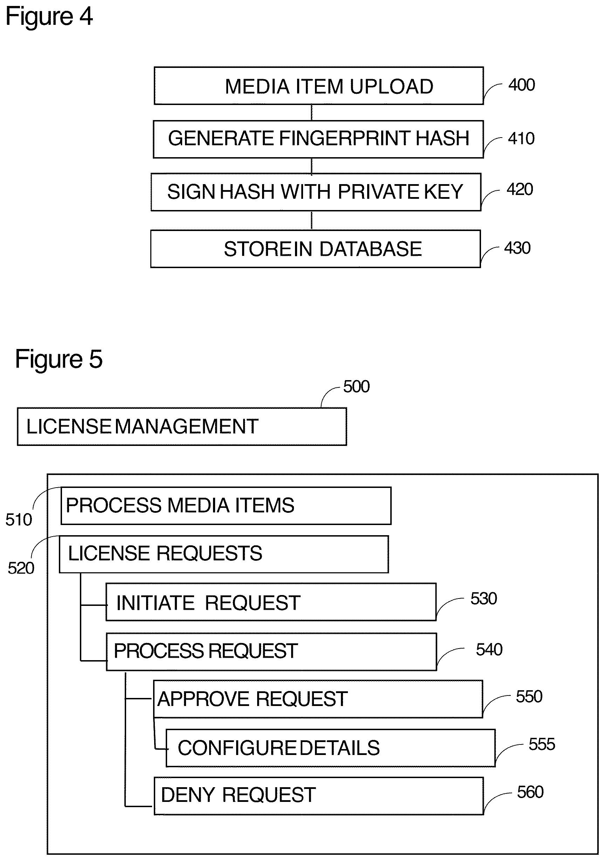

Turning next to Figure 2, this figure illustrates the structure of a preferred platform utilized and provided by the instant invention. The platform **200** consists of two main sections, with one being identity and content management (section A) **210** and the other being license management (section B) **220.** Section A is characterized by the following different functionalities, as disclosed in Figure 3. As a first step and functionality the system provides a registration step **300** which any person that would like to participate in this system and utilize the content protection functionality would run through a specific registration process. Preferably as a next specific step or alternatively being implemented separately the registration of any user will be subjected to an identity check **310**, that can be implemented with a verification over for example official documents to enhance and secure the trust in the system. As a further important and integral part of the identity and content management the instant invention will generate a special crypto-ID **320**, which consists of a combination public **330** and private keys **340**, wherein the private key is exclusively supplied and known to the user. As an essential and final part of the identity and content management section the system provides an upload functionality **350** to the user. This functionality allows the user to provide personal media items to the system, as disclosed in Figure 4, during or after successful completion of the upload **400** the instant invention will generate a cryptographic fingerprint for each upload data file, with the cryptographic fingerprint being generated as a hash value for the uploaded data file **410.** This hash value in a next preferred step will be signed with the private key of the user **420** and stored in a database that is associated with the platform of the instant invention **430.**

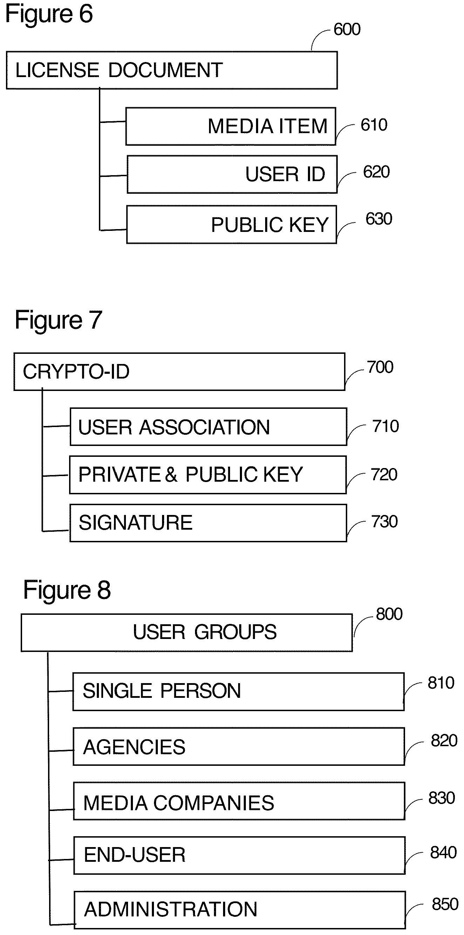

Turning next to Figure 5, Section B of the platform is directed to license management **500**, wherein as a first functionality the owner of the personal digital material can access and manage all of the owner's personal data files **510** either already signed or unsigned. An additional part of the license management is processing licensing requests **520**, wherein every party that is a participant in the instant system can, within the confines of the platform, issue a request **530** which indicates which content they would like to utilize and to what extent. An additional component of the license management is processing of the licensing requests **540.** The platform receives each licensing request and allows the owner of the personal digital material to either approve **550** or deny **560** the request and specify and configure details of the request **555**, e.g., the license duration and license compensation. One aspect of the license management, as disclosed in Figure 6, is the generation of a license document. The license document **600** is a digital representation of the permitted utilization of requested digital content **610** being a part of the instant invention. This license document is generated by the platform and linked and signed with the public key **630** of the owner **620** of the requested digital content, allowing any interested third party to verify if the license and licensing use is authentic and legit. The combination of both section's identity/content management and licensing management provides a simple, yet secure and effective chain of content owners consisting of user plus crypto ID leading to signed personal content and furthermore to an efficient license management and license acknowledgment.

Turning next to Figure 7, this figure illustrates some details and functionalities associated with the crypto ID of the instant invention. The crypto-ID **700** utilized by the instant invention is an ID that is associated with a single user. It can be regarded as an important aspect of an embodiment. It is different from the well-known password-based authentication methods where a simple password might be hacked or even guessed. Instead, the instant this embodiment relies on cryptographic keys and, by utilizing strong encryption methods (e.g. RSA private / public key **710** or elliptic-curve-cryptography), a high level of protection can be ensured. A first important characteristic of the role and properties of the crypto-ID is its uniqueness - each crypto-ID is unique and associated with an authenticated living person **710.** As a second characteristic the crypto-ID provides a strong indisputability for participating parties, wherein each user that does sign content with their unique private key, cannot plausibly deny being responsible for that signature - the principle of non-repudiation. A third important characteristic is the possibility of verification by third parties. The signature **730** of each item of personal content provided to the system can be used to determine its authenticity and functional integrity that is unchanged since the provision of the content to the system. Utilizing these individual and important characteristics the system of the instant invention simplifies the ability to determine authorship and co-authorship and additionally adds an automatic mechanism to specifically assign licenses.

An embodiment of the instant invention provides the opportunity for the user to discern authentic content generated by human participants from content generated artificially or content that has been falsified or heavily manipulated. The system is not directed and not able to prevent the generation of content generated artificially or generated by artificial intelligence. But the system makes it possible for any interested party to determine if a digital photo or recording from a real person has been approved for distribution with a crypto-ID associated with that person. Therefore, according to the instant embodiment if a digital photo showing a specific person is being circulated and it has not been signed with the crypto-ID associated with that specific person, the authenticity of this photo can and has to be put into question. Participating parties, like agencies, media creator and even private individuals utilizing the platform of the instant invention can rely on this criterion for a pivotal verification.

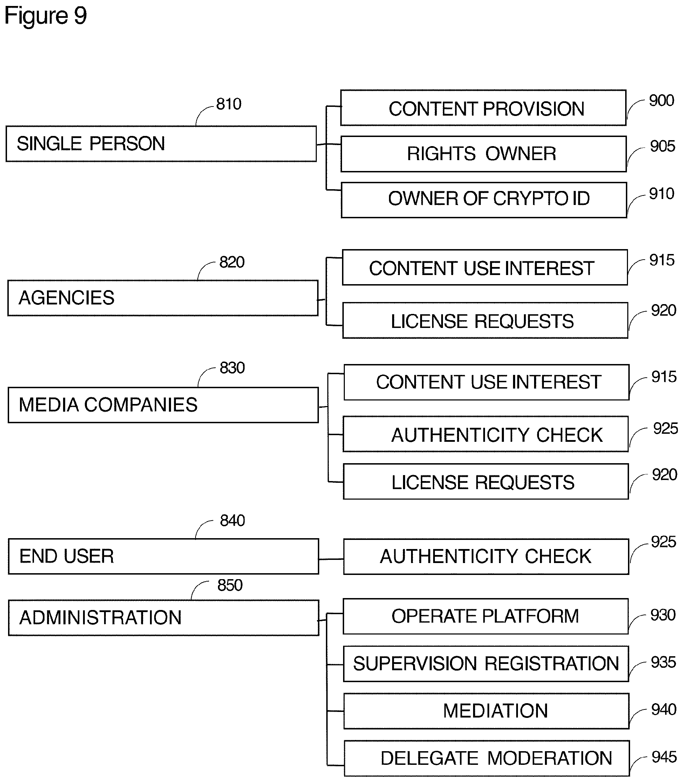

Coming next to Figure 8, one embodiment encompasses and provides access to multiple categories of users **800**, wherein these groups of users interact with the system of the instant invention and with each other. The interaction between these groups and the instant system is implemented without the addition of specific technical enhancements, for example API technology. This embodiment provides for at least five different categories of users, which might vary from (a) single person, artist, influencer **810**, (b) agencies, movie studios **820**, (c) media companies (tv broadcasting stations, publishing companies) **830**, (d) end-user, the public **840** and (e) administration **850.** Turning next to Figure 9, this figure illustrates one way that each participating party of this system can access different functionalities and have different reach in terms of interaction possibilities. User category (a) **810** provides content (private or professional) to the system **900**, which content might be photo shoots, music recordings, videos, etc.. This group will typically be participating as rights owners **905** and owners of the crypto-ID **910**, which allows these users to decide at an individual level if third parties would be allowed to utilize the content. User category (b) **820** are primarily parties encompassing content creators, who are looking to add external content **915** to their projects, where the addition might be realized by purchasing or licensing that content. From that particular group of users specific usage requests are directed to rights owners **920.**

The third user category (group (c)) **830** comprises media companies like tv broadcasting stations or publishing companies. The desire of these users to participate in the instant invention comes from a need for video and photo material for broadcasts or media productions **915.** In this example, the participants utilize the system to first find newsworthy and current content available on the platform of the instant invention, which is also communicated to the system by initiating license requests **920** and additionally that category of users must be able to determine without a doubt if the available content is genuine, authentic and licensed **925.** User category (d) encompasses end-users **840** and the general public. These users are primarily consumers of media content and can, if it has been provided by the platform, initiate simple authenticity requests **925** with the system of the instant invention. The last user category, group (e) represents the administrative part of the users **850.** The administrative users manage the platform **930**, supervise the registration process **935**, mediates potential issues **940.** In addition, these users may also able be permitted to delegate moderation rights **945** to particular users.

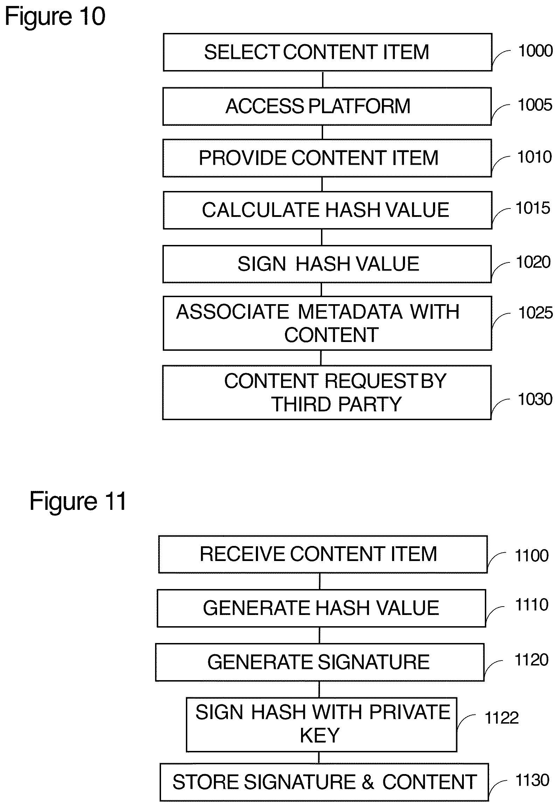

Turning next to Figure 10, this figure illustrates a typical process of one embodiment of the instant invention. As a first preferred step, a user of the platform of the instant invention might generate a music video **1000** and would like to publish it online. However before publishing the data file, that user would like to protect it, to make sure that no one can claim that the file was been generated by an artificial intelligence program or a different individual. As a next preferred step, the user will sign into his or her personal account **1005** and upload the data file to the system **1010.** The system will calculate a unique hash value **1015** and this value is then signed with the private key of that user **1020.** In addition, this embodiment will associate metadata like a title, description and recording time with the file and the hash value **1025.** In a next preferred step, interested third parties will be able to access the platform of the instant invention, find the content, and have an in utilizing some sequences from the data file. In a next preferred step, the interested party will utilize the platform of the instant invention to initiate a contact with the user and ask to use a particular section of the data file in media content that will be published in a media representation of that third party **1030.** Additionally, the request includes not only the usage request but includes also information about utilization purpose, coverage (for example publication on a website, use in an advertising campaign, etc.) and potentially a form of compensation.

The instant invention will preferably be set up to work with a conventional database structure, although in other extensions of that approach other storage concepts might be implemented. Turning next to Figure 11, this figure illustrates the upload process that comprises of a plurality of different steps that are directed to automatically handle the incoming data content. In a first preferred step, the platform of the instant invention receives the data file **1100** which will then be subjected to a hashing algorithm (e.g., SHA-256) which processes the data file and generates a checksum (hash) **1110.** As a next preferred step, the instant invention generates a digital signature, wherein this digital signature is represented by signing the checksum with the private key of the content owner **1122.** The digital signature as well as the data content will be stored within the system of the instant invention **1130.** The data content will be stored within a participating server architecture, with the digital signature including meta data (uploader-ID, timestamp, filename) associated with the digital signature beings stored in a database associated with the instant invention. The verification of authenticity of the data content is implemented by calculating the hash value of the data content again and verifying the so generated signature utilizing the associated public key. If the stored hash is identic with the previously generated and stored hash, the data content is authenticated.

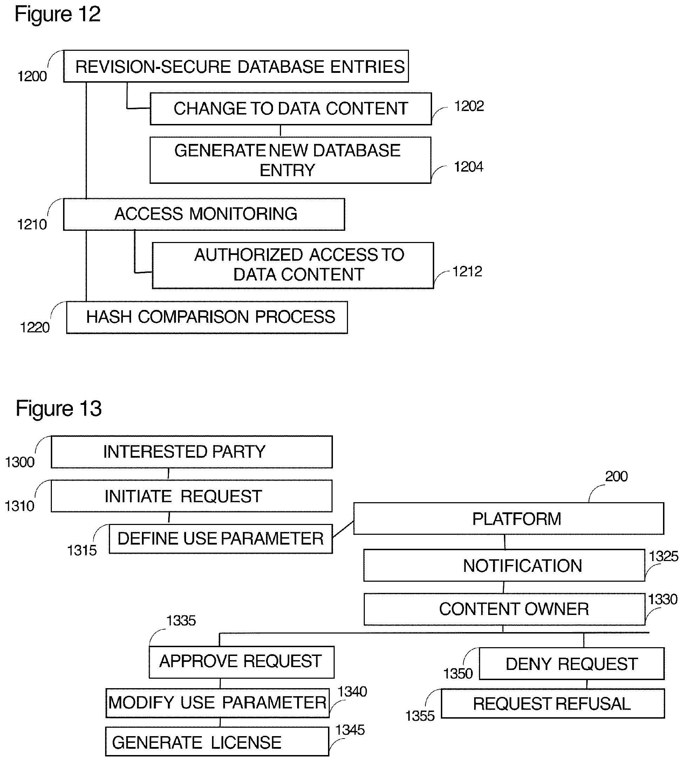

Coming next to Figure 12, the instant invention provides a number of different mechanisms to secure the integrity of the system. As a first mechanism, the instant invention utilizes revision-secure database entries **1200**, i.e., every change in the data content **1202** (e.g., a change to the metadata) generates a new database entry **1204** and the previous older entries remain recorded. A second security mechanism provided as part of the instant invention is the provision of strict monitoring **1210** of access to the database, wherein only the owner of the data content and the associated rights or a user with an management role **1212** can institute changes to metadata or access parameters. A third mechanism to protect the integrity is a continuous, recurring comparison process **1220** running in the background, wherein hashes of the stored original files will be compared with the hash values stored in the database in recurring intervals.

In addition to the previously disclosed signature-based rights and access management approach of the instant invention, the system also provides an easy to use and accessible clearance and approval system that is intentionally built to be in step with actual practice and illustrated in Figure 13. The associated clearance and approval system will be a modular system that can be extended or automatized if necessary. Interested parties can connect to the system **1300** and generate a request **1310** that might include the type of content they want to use and the intended use **1315.** The instant invention will initiate an automatic notification **1325** to the owner of the content **1330** of that particular use request allowing the content owner to approve the request **1335** and specify the use parameters **1340**, for example a one-time use of the content in specific publication venues and additionally if and what type of a monetary compensation is connected to the content. If the content owner denies the use request **1350** the instant invention will automatically refuse that request **1355.** Therefore, the system automatically prohibits the illegal adoption of the content. If the content owner approves the use request the instant invention generates a case-specific contract, a license document that is associated with the signed content and is accessible to all participating parties specifically for that particular content request.

The disclosed system provides a strong protection against manipulation of content without the utilization of advanced methods like AI-based fake detection. For example, if an individual provides an AI-generated photo and intends to represent it as authentic, the system will formally generate a signature utilizing the data from that individual. However the photo will be assigned to the actual real person and if someone combines this photo with the real face of another person, the other person can upload a personal real photo to the system of the instant invention and therewith establish the fraudulent nature of the initial photo because the hash values do not match and the signature of that photo is not associated with the real person. Additionally, interested parties can double-check with the actual content owner to determine if a particular photo is indeed signed by the actual owner and if an AI-based generation has occurred without explicit approval, it can be asserted that the platform of the instant invention did not issue an authentic approval.

The workflow of the instant invention is directed to encompass within its functionality multiple users and also different sorts of media production and media utilization. In case of photographic work **1400**, both the photographer **1410** and a human photo model **1420** can potentially both participate and profit from the functionality of the instant invention. Preferably both the photographer as well as the photo model will register within the system **200** so that both the content creator (photographer) as well as the imaged person (model) can specify their individual interests and rights associated with the photos. The model can define and keep a check on how the photos will be utilized by third parties, and the photographer can protect his or her copyright. In case of journalistic work, the instant invention also provides easier access and distribution possibilities and secure utilization of content for the content creator and owner and interested parties. Therefore, a journalist who is working on a documentation or other content provides this content as raw stock to the system to protect it. In case that a broadcasting station is interested in utilizing parts of or the complete raw stock it is possible for the broadcasting station to communicate a corresponding request for utilization and, if the request is approved, the broadcasting station will have irrefutable proof from that moment on that the license to use this content is valid. Additionally, the instant invention is also applicable to content producers like influencers, who constantly put out new video material, wherein with signing each new video release the followers/audience of the content producer can access the platform to determine the authenticity of the content.

The instant invention is intentionally designed to be applicable to private users as well as commercial users with the main direction to provide a low-threshold in terms of accessibility. Each individual person who desires to protect a photo or video recording is able to utilize the system of the instant invention. The architecture and layout of the instant invention is intentionally directed to function without an elaborate infrastructure directed to rights management or information technology. Commercial users like media agencies, publishing companies, media production companies will have the opportunity to set up structure workflows, utilizing the functionality of the platform of the instant invention that provides, for example, a precise outline showing existing content, provided approval of content and also pending requests. Thus, the system is different from pure professional databases or complicated rights management systems, with these systems mostly only accessible and affordable for large corporations. The instant invention is directed to address the wide variety of different users and uses.

In addition to the mentioned and disclosed user groups utilizing the instant invention, an end user can also be provided limited access depending on the actual final platform design. In this embodiment, the user might be provided limited access which would allow the end user to determine if a particular media item has been signed utilizing a search function. A potential usage scenario would be to allow the end user to upload media content or initiate a metadata (title, description) based search request and, in a next preferred step, the system of the instant invention will display to the end user the information of such a media item that exists in identical form and who signed that content. Such a functionality provides transparency and helps to uncover disinformation or fake news, without in-depth technologies.

The instant invention will preferably be designed to process any current file formats, where it might be digital images, audio, video, documents, etc. The only technical requirement will be that the instant invention will generate a unique hash value according to the technical specification. Since almost every digital file is suitable for submission to a hashing procedure, there are almost no limitations. The signing process will be implemented independent from the actual files.

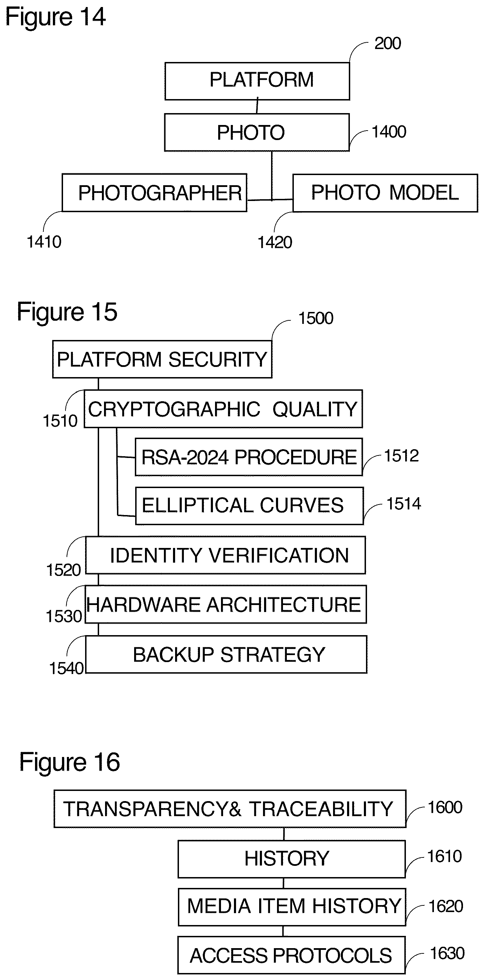

Turning next to Figure 15, this figure illustrates one embodiment of how the instant invention can provide and implements multiple components that are directed to strengthen and protect the security of the complete system **1500** of the instant invention. As a first component the cryptographic quality **1510** is secured by utilizing at least an RSA-2024 **1512** procedure or equivalent elliptical curves **1514** to ensure that signature cannot be falsified. The second component is directed to secure the access registration process utilizing identity related verification **1520** to avoid falsified accounts. The third component is a provision of a specific hardware architecture **1530** on the server side of the platform, wherein scalable cloud environments or dedicated data processing centers are provided to process large numbers of uploads without problems. The fourth component is a dedicated backup strategy **1540**, wherein the instant invention initiates recurring backups of the database containing user data, signatures and the uploaded files. All these components ensure that the system is equipped to process a high number of users.

The instant invention additionally provides a framework for transparency and traceability as disclosed in Figure 16, wherein all actions initiated by a rights owner beginning with upload through approval to possible changes to metadata can be traced via its history **1610.** This can potentially help in mediation, wherein if ambiguities arise it is possible to prove when and how data content was provided to the system. Furthermore, the system provides a reliable versioning history system **1620** directed to catalogue different versions (e.g., a new cut of a movie) in terms of their publication and upload them to the system. Additionally, the system of this embodiment can provide access protocols **1630**, that might be utilized as authoritative proof in litigation, showing with high certainty when a specific file has been signed and its approval state.

The system is designed to address the rising number of digital content creations and the associated rising problem of AI-generated content, thereby making the instant invention relevant to the market and society conditions. The differences as compared with the state of the art include client centricity, wherein instead of negotiating licensing contracts that are of high complexity and that are only understandable by lawyers, the instant invention is designed to provide a clear and intuitive process. Furthermore, all participating parties can quickly determine the licensing status of any available content in the system. The instant invention is also designed to be easily established and easily accessible. Various embodiments are therefore designed to implement the keystones of the system: personal IDs, that are cryptographically secured, the upload and signing of digital content, a clearly worded license, and rights management and the ability to determine if content is authentic and authorized.

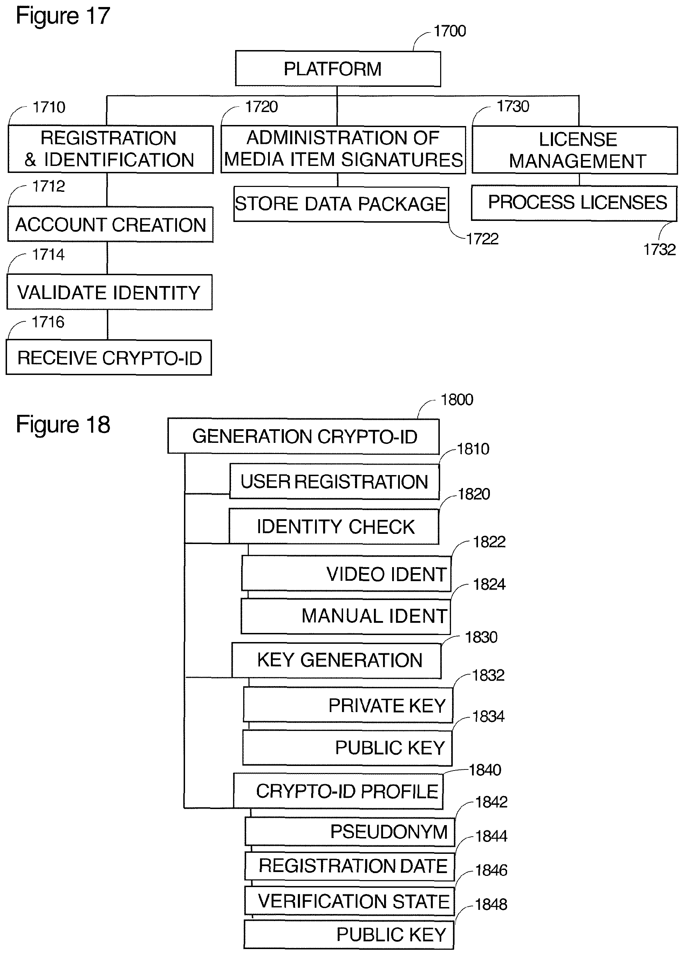

Now that the background motivation, the core functionality as well as the fundamental setup of the of the instant invention has been disclosed, specific components will be discussed again and the connections between these parts will be more clearly explained. Personal crypto-ID is an important aspect of various embodiments which includes the signing and signature of content and the licensing process in detail. The instant invention in its base direction preferably does not contain externally integrated technologies (for example blockchains or complex interfaces) and is therefore organized around a central platform architecture. This version of a central platform **1700** is disclosed in Figure 17 and provides and secures the following particular points:
a) registration and identity **1710:** this allows new users to create an account **1712**, validate their identity **1714** and receive as a result an individual crypto-ID **1716**
b) administration of media signatures **1720:** the platform provides a database/data storage in which all provided content is stored in a uniquely linked form **1722** (data file + hash + metadata + signature)
c) license management **1730:** the system provides an interface allowing the user to request, approve or deny licenses **1732.**
The instant embodiment provides this core functionality with this base setup without requiring any additional software-components or distributed-ledger-systems. This approach allows for an easy access to the functionality and provides a fast, efficient processing.

A more detailed description of the crypto-ID is illustrated in Figure 18. Crypto-ID is one of the important mechanics of the instant invention. The approach of this embodiment is designed to generate the crypto-ID **1800** diligently. This is important because the trustworthiness of the system is based on the premise that the person owning the crypto-ID is indeed a real person and is participating with his or her real name or real personality. To achieve a high level of trustworthiness the user will have to register with the system **1810** and complete an identity check process **1820**, that is usually comparable to the processes implemented for the online registration of banks or insurance companies. For example, a copy or photo of an identity document might be provided or some kind of video-ident-process **1822** could be used. The instant embodiment alternatively provides other verification variants, for example manual examination **1824** of data by authorized personal, although these other variants might depend on the particular regional jurisdiction. Additionally, a key pair **1830** will be generated, the pair consisting of private **1832** and public key **1834.** In order to reach this step, a successful verification step will be required, after which the key pair generation will be executed either automatically by the instant invention or the user will be able to generate the key pair locally on his or her computing device. As is customary, the private key remains with the user and the public is stored on the data storage of the platform.

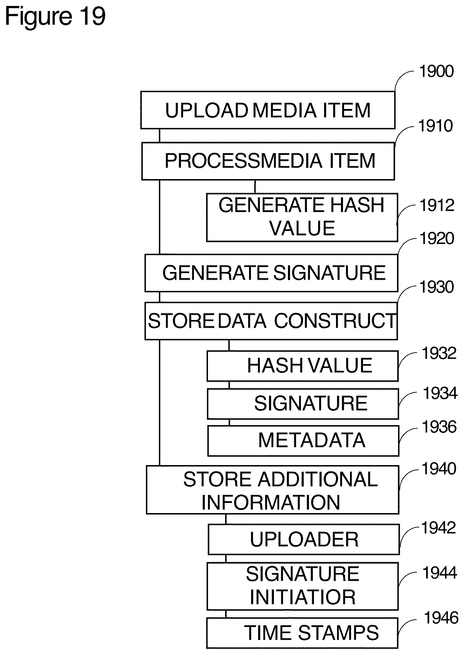

The instant embodiment utilizes a central crypto-ID-profile **1840**, which includes the basic data of the user, which might include the user's name. In some instances, a pseudonym **1842** might be used. Additionally, a registration date **1844** and a verification state **1846** might be combined with the public key **1848.** The so-generated data set represents the personal crypto-ID. With this particular approach the instant invention ensures the establishment of a connection to a real person, which is indispensable regarding the reliability of the signatures. A central desire of the instant invention is to make sure that specifically only the person that is providing the digital item and signing it, can specifically verify the personal ownership. As is disclosed in Figure 19, typically, the process begins with the upload of a digital item to the system **1910.** The instant embodiment provides multiple ways to initiate this upload, e.g., by utilizing a browser interface, with a software running on personal computer or mobile devices, etc. The uploaded digital item will then be processed on the server **1910**, wherein this processing executes a hash value generation by utilizing a hashing algorithm (for example SHA-256) that provides a unique digital fingerprint 1912, that is designed to change at the slightest differences on the bit level.

The platform will then add a signature **1920** to the generated hash value, with the signing process being performed either locally on the personal computing device of the content owner or on the server. Needless to say, the private key must be securely stored either on the user's computer or on the server if the content owner allows the server-side access to the private key for the signing process. The resulting data construct consisting of hash value **1932**, signature **1934** and metadata **1936** will be stored in the database **1930** of the platform. In addition, other information might be stored **1940** such as the identity of the individual who provided the digital item to the system **1942**, who initiated the signature **1944** and the associated timestamp for both interactions **1946**, etc. By utilizing this approach, the system identifies and records the identity of the individual who signed the digital item. So, if there are potential claims of who is the owner of content, the actual owner can readily be determined.

The instant embodiment provides a very simple verification process to make sure that participating third parties can rely on the authenticity of signed digital items. Initially any party interested in determining the status of a digital item in connection with a particular content owner can generate the hash value of the item. This can be implemented either by accessing the platform of the instant invention or by utilizing a hashing algorithm that is either the same or compatible with the hashing algorithm utilized by the instant invention. The generated hash value will then be provided to either the platform of the instant embodiment or any application utilizing the same databases to determine if this the hash value matches that of the content signed by the content owner of record. If it does match, the instant invention will then provide a positive answer, meaning that the database content provides the information that, for that particular hash value, the signature of the content owner is available and also the information about the timestamp establishing when the digital item has been provided to the system. The negative answer will either tell the participating third party that no entry for the provided hash value exists in the database or that the signature does not belong to the content owner, but to a different content owner. With this approach the instant invention provides a very simple and effective way to determine if a digital item is genuine or if it does come from an arguable source.

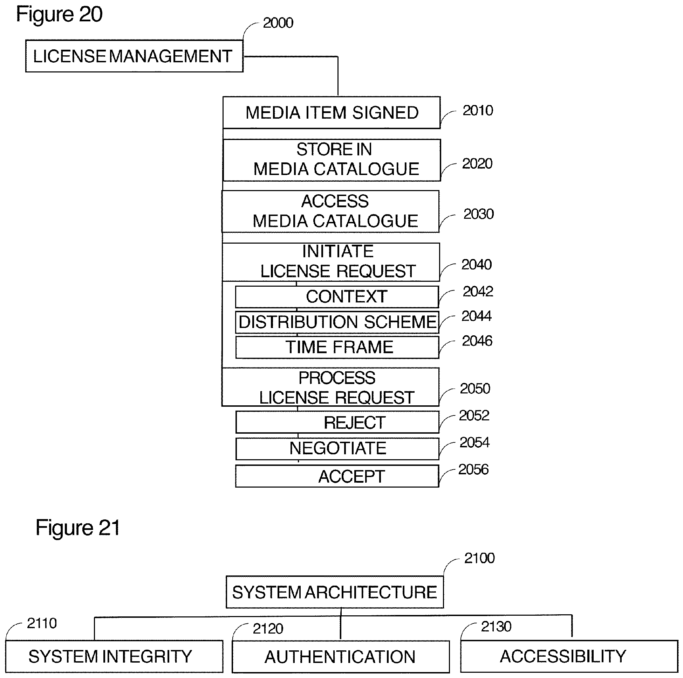

As is shown in Fig. 20, In addition to the identity and signature functionality the instant invention implements an elaborate system for providing, receiving and managing licenses **2000**, which does not integrate external technologies. According to this embodiment, the licensing system provides the functionality to define who utilizes which digital item in what context. As soon as a digital item has been signed by the content owner **2010**, it will be added to a catalogue on the platform of the instant invention **2020.** The catalogue can be associated with a particular content owner or it can be a dynamically generated list that will display search results that have been added to the system into the platform by a participating third party. The catalogue is made available to interested third party users and provides an opportunity for them to preview the content **2030** and, if they want to use a digital item in some fashion, initiate a licensing request **2040.** Associated with the licensing request, the user will be able to provide information related to the intended usage, e.g., how the digital item will be used, in what context **2042**, what form of distribution scheme is intended **2044**, the time frame (e.g., duration, single/multiple usages, etc.) **2046.** The initial licensing request, as well as the information provided will be transmitted to the content owner who will preferably be notified in real-time, via email or other potential connection variants stored associated with the account of the content owner.

The content owner **2050**, after receipt of the licensing request, can initiate three different actions -the content owner can reject the request **2052**, suggest an alternative licensing arrangement **2054**, and accept the proposed engagement **2056.** If the offer is rejected **2052** that information will be communicated to the interested party and the digital item will not be licensed. If negotiation is desired **2054**, the owner will be able to suggest changes **2054** to the terms of the proposed license. That proposal will be communicated to the interested party and will provide the start of negotiations regarding the license. The third action might be the acceptance of the licensing request **2056** by the content owner. In some embodiments, a next step might be for the content owner and the interested party to engage in a negotiation over license fee, if a fee is desired by the content owner. The instant invention will then store information related to the licensing request in the system, this information includes licensing details like the running time of the license, the format/venue of the license (article, social media, video, print) and the planned and predicted coverage. The instant invention also stores the effective date the license has been granted, the kind of license (e.g., single use or other) and additional terms and conditions.

Such an integrated license management provides a number of advantages, one being the reduction in complexity in relation to traditional rights management approaches. Previous approaches required the exchange of manually generated contracts or relied on a third party system, whereas the instant invention unifies everything in one platform. This is accomplished by the principle of direct communication between rights owners and interested parties via a central interface, which tends to create clarity in terms of communication. Furthermore, since every license transaction is recorded, an interested party cannot secretly copy a digital file and later assert that the party is the content owner. Thus, the instant approach minimizes the risk of fraud. Additionally, the integrated license management provides a constantly accessible and comprehensible history of interactions associated with each digital file, illustrating who received what approval at what time.

Various embodiments provide the functionality to handle common licensing conflict scenarios. For example, in case of illegal upload, where someone provides a digital item to the platform that he is not the owner of, the actual content owner will be able to detect this submission, evaluate it, and notifies the system of this violation of system wide rules. The platform will investigate the case and will either block or delete the digital item if ownership was wrongly claimed and will impose sanctions against that user. In a case where content was used outside of the licensed permissions, the content owner can inform the platform which will then mark the data associated with the digital item as invalid, which at least documents that the use of the digital item starting from that marking is being utilized against the original agreement.

At its core, the instant invention provides an architecture **2100** designed to secure the functionality and the access and processing of digital items. One aspect is the integrity of the system **2110**, wherein the functionality and content is protected against subsequent modification. A second aspect is a strong and reliable authentication process **2120**, wherein the association of digital items to real persons, the content owner is secured unequivocally. A third important aspect fundamental for the functionality of the instant invention is directed to secure the accessibility **2130** of the platform, meaning that the system is directed to be reliable and scalable.

An important component of the architecture to secure the functionality and the access and processing of digital items is that all data transmitted between participating users (client) and the platform (server) is secured with the TLS/SSL or similar protocol. This makes sure that neither passwords nor uploads of digital items by third parties can be intercepted or manipulated. Another important aspect securing the system is the strict storage of all data including content on the server. The instant invention stores the user accounts with associated public key and identity information, signed content, including the hashes and signature and the generated licensing contracts. All this data is stored in a central database on the server. In order to handle all interested and participating parties, as discussed previously the instant embodiment provides a number of roles for participating parties. An administrator role **2200** provides full access to the system **2205**, but has no access to the private keys of the users. The content owner role **2210** is able and allowed to upload content **2212**, process content licensing requests **2214** and manage account settings **2216.** The interested party role 2220 can access the database **2222**, search the database and initiate licensing requests **2224.** Additionally, the system could provide a guest user role **2230**, that allows users to access a part of the content database **2232**, without providing digital data to the system or initiating licensing requests. Foe each access to the system, the instant embodiment checks to see if the user in its user role within the system is authorized to execute specific tasks (upload, download, initiating requests).

As another important aspect of the security features of the system, the instant invention also provides a recurring integrity monitoring which is implemented with, e.g., random sampling and inspection. That is, the instant invention occasionally calculates a hash value of a stored digital item anew to compare this hash value with the hash value that has been stored in the database for the digital item. This approach is intended to detect manipulation or corruption of digital items. Another important part of the integrity control is versioning, which is intended to track modifications of a digital item and to generate different hashes for different versions. The instant invention will detect that these are variants of the same digital item, which is achieved by a comparison of the metadata and will ask the content owner of the provided digital item if it is a new version of a preexisting work.

The functionality of the instant invention is designed to be utilized in multiple different media industries that are associated with different media formats. One application that the instant invention suitable for handling is artistic image material **2300** that is created in photography and graphic design. For example, it is very common that images or photos are utilized without approval of the content creator, be it on blogs, social media or in commercial campaigns. The instant invention is designed to allow the content creator to provide and sign its portfolio **2335** on the platform and allows a formal licensing grant **2340** to be issued that permits utilization of the portfolio. Additionally, the instant invention allows anyone to easily and quickly determine if a particular photo is part of a registered portfolio or not **2345.**

Another media type to which the instant invention may readily be applied is acoustic material **2310**, e.g., podcasts, songs, recorded speech, etc. Basically, any sort of acoustic material / audio recording can readily be submitted to the instant invention and signed **2335.** If a content creator provides a song to the platform, the creator can be assured that the authorship is attached to it and if an interested party, e.g., a radio station or a YouTube channel, desires to utilize the song, a licensing request will need to be issued from inventive system to the interested party **2340.** This will prevent a song from being embedded unquestioned in the audio track(s) of video material or that the song might be released with incorrect authorship information. In the case of acoustic material, the instant invention also handles the situation where multiple content creators (e.g., coauthors) work together to create a work **2350**, e.g., a song with a composer, performer and producer. In that case the functionality of the instant invention allows every single contributor to access the platform, sign a particular section of the digital item and in the end define one content owner who is in charge of processing the licensing requests.

The instant invention can also be applied to film or video material **2320.** For journalistic material, it may be important to be able to prove that the material is authentic and an identical copy of the original content **2345.** In some cases, it might also be necessary the people that are shown in, e.g., an image have agreed to a publication. The instant invention supports a multitude of different applications and variants associated with the generation and processing of video material. As has been generally described previously, every video file will be signed **2335** and multiple participating entities **2350** can sign specific sections (e.g., audio, video, mixing, production, etc.) and the entities can select one entity as the one that is in charge of processing the licensing requests. Additionally, the instant invention can log when different versions have been uploaded and signed into the platform **2355.** For example, these versions might be from different cuts, contain different audio or video processing, or could even be a raw cut. This arrangement allows different entities to participate when different scenes or sequences in the video material have been added to or edited in the video material.

The instant invention is also applicable potentially to textual material **2330** which could be generated, provided and signed by authors as the content owners in the system. This provides a safe approach to content creators making available textual works for licensing and also makes it possible to demonstrate that a specific article is indeed from the person that claims authorship. This makes it easily possible to detect plagiarism, because the original text is available with timestamp in the system. The instant invention also introduces an optional plagiarism check **2345** wherein the content of new textual submissions are checked for similarity with previously stored material. However, the main focus is the signing of the content, not the semantic similarity check.

Apart from the previously mentioned utilization of the instant invention for content creators and the option to protect generated content primarily for purposes of monetizing the content, the functionality is also applicable to the individual who desires to protect sensitive content and keep it private, being it photos or videos. The instant invention can make it impossible for anyone who does not have permission from the owner to legally access and utilize the content. The instant invention provides very secure system and a clear proof of ownership. In case of violations of use, for example if photo or video material is released to social media, the actual owner can demonstrate ownership, prove that a license for the material has not been issued (or that the usage is outside of the license grant) and issue a takedown notice.

As has been disclosed, the instant invention is not directed exclusively to experts or the media industry, it is more generally designed for use by the public. This is one strength of the instant invention. Because the technology is based on a trusted pattern - central database, cryptographic signing, user accounts - the learning threshold for users is decisively low. Everyone from hobby photographers to famous artists can easily access and utilize the system of the instant invention, can register, sign and administrate the multimedia works generated by these users, which could lead to a democratization of copyright licensing and enforcement. The rising functionality has created potential problems associated with the ability of modern generative artificial intelligence systems to create audio, video or photos that are almost indistinguishable from actual media. This has created obvious concerns in connection with determining the authenticity of media items. AI generated media now poses a considerable threat of facilitating the distribution of disinformation. For example, a falsified video work could show a famous politician making a scandalous statement. In case that the original of the recording has been submitted to the instant system and signed by the owner, media experts or interested parties can initiate a comparison and detect if the video material in question has been signed by the official account of the famous person. Even though the instant invention cannot prevent the generation of such fabrications, it provides a way to verify the authenticity of genuine recordings and provides an opportunity to discern fake content.

The above described and disclosed approach provides a fundamental architecture, that is potentially being refinable and expansible. The inherent potential makes the instant invention interesting for all participating parties in the media industry.

A specific elaborate description of a use scenario within the media industry should be disclosed herein in connection with Figure 24. This figure illustrates the application of the instant invention to the movie industry and specifically how an independent filmmaker might utilize an embodiment in connection with a short film project **2400** with multiple participating persons. As a first preferred step the director **2402**, who is the project leader, registers **2410** with the platform and completes the identity verification **2415.** After the verification process has completed, the user will receive his personal crypto-ID **2420.** The main actor **2404** also registers **2410** with the system, as well as the cinematographer **2406** and both receive their own individual crypto-ID **2420** after verification **2415.** As a next preferred step, the director will upload the finished short film project **2400** to the instant system and it will be signed with his crypto-ID 2420. In addition to the finished output, the director can also provide multiple additional data files associated with the production **2408.** For example, these files might include deleted scenes or outtakes. Every data file associated with the project will also be hashed **2422**, signed **2424** by the platform **2490** and stored **2426** within the system of the instant invention. The additional uploaded data items will be associated with the "project" **2430**, for which the project leader has defined the label.

The main actor **2404** as user of the platform will be provided access to the project **2430** and will, as a first step, examine all digital items stored within the project and will verify his or her participation **2432.** Additionally, the instant invention will provide the opportunity for the main actor to specifically select individual sections **2434** from the digital movie and specify that these sections can only be published after an additional inquiry. That is, the instant invention will manage these access limitations once a licensing request is introduced into the system. As a next preferred step an interested party **2450**, e.g. persons planning a short film festival, access the system **2452** using their existing account, find the multimedia work and submit a licensing request **2454** for a public presentation. As a next preferred step, the instant invention will provide the licensing request to the project leader, who will accept the request and defines that the content will be shown once at a specific date. This approval **2460** will be stored as licensing dataset / contract which the licensee can access and if necessary, utilize it to prove to third parties the validity of the license.

In contrast to well-known DRM-systems or the generation and application of watermarks the instant invention provides unique personal crypto-IDs that are associated with an individual whose identity has been verified. Additionally, the invention furthermore requires, utilizes and implements an upload and signature process, that documents the authenticity and integrity of the content. Further, the instant invention integrates the licensing process into a central interface to reduce misunderstandings regarding usage rights. Some alternative solutions only address one of the mentioned aspects. But no other known continuous connection between the identity of content creator, signing and authenticating original material and clear-cut license management possibilities is known to exist.

A number of extensions in functionality of the instant invention are possible and potentially integrable into it. For example, it would be possible to reach an agreement in terms of financial compensation for participating parties, i.e., to add an integrated form of payment processing to an embodiment. Furthermore, the system might be enhanced to go beyond the definition of access rights and licenses associated with provided content and feature an automatic context verification, to therewith automatically let the system determine if licensed content is being utilized in suitable or unsuitable context. In addition, the instant invention might be extended with a functionality to periodically and automatically search for licensed content in, for example, social media and determine the legality of that particular use.

As has been described, the instant invention is designed to provide all interested participants access to the functionality of the system, so the potential customer base might be composed, not only professional media agencies, or experiences IT-users, but also layman and private individuals. Therefore, the user interface of the instant invention is designed to conform to a number basic principles including a clear and concise interface structure, where each user can see what content has been provided to the system and which license requests are outstanding. In addition, the instant invention preferably provides a step-by-step assistant which, after the first upload of digital content, provides a guided tutorial for each step in the process. Still further, to help quickly discern the status of each license, the user interface would preferably feature visual aids with colors or symbols associated with the content stored in the system. Also, the user interface would preferably feature context sensitive help texts, wherein the system will be able to automatically show explanations for sections of the user interface. These approaches are designed to keep the access barriers to the system as low as possible and help raise the public awareness of the system. This will assist in its rapid and wide spread adoption and encourage users of all ability levels to use the unambiguous authentication of digital content generated by humans.

In addition to the above-mentioned features of various, the reliability of the system is of great importance. The user needs to be certain, that the stored material is not only technically protected, but also permanently available. To help achieve this goal, the instant invention provides documented processing. That is, every important step, be it upload, generation of a signature or license approval, etc., will be logged, with only authorized persons being granted access to these logs. Utilizing this information, the instant invention can - if requested by a content owner - generate a listing of all relevant actions, which, if necessary, helps to determine when a particular digital content has been provided and or signed and by whom.

An embodiment of the instant invention in its basic form is also able to process special cases, that are not explicitly covered automatically by the disclosed functionality. However, the instant invention is with minimal adaptations able to cover these special cases. For example, it is quite common that more than one person has worked on a particular multimedia work, for example a photographer and a photo editor might have participated in generating an output photo. As another example, a band usually consists of more than one musician. In the latter case there may be no obvious master owner of the content rights (e.g., a music label). However, the instant invention is able to provide feasible solutions. One approach might be to have the band members select one person who would be responsible for administrating the access rights. The selected person would upload the digital item and generate and assign the signature. An alternative approach would to generate a group account, which would be accessible by all participants and who would all have individual access to the same private key. This approach would require mutual trust of all participants. One other approach would be a system where multiple signatures are required. In this arrangement, a license would not be granted until all of the band members have signaled their approval of an offered license. Each band member would upload the same multimedia work to the system and sign it and each content creator would be issued his or her own crypto-ID. The instant embodiment would then associate the so-called identity duplicates with same hash value. Each content creator would be required to store an entry in the metadata saying that the multimedia work has been created by coauthors.

The instant invention also provides a method for participants of the system to utilize an agent who is authorized to license the work on behalf of a content creator. The content creator is able to provide the agent authorization for managing the account(s) of the content creator. Another embodiment would allow the account of the content creator to set up as a shared account, or, alternatively, the agent could set up a sub account within the account of the content creator, which would be linked the crypto-ID of the content creator. As still another approach, the instant invention would allow the participants to add an entry to the metadata of each stored multimedia work that a specific user is allowed to initiate uploads and manage licenses independently from the content creator. The instant invention typically would not judge if authorizations are legitimate: it logs who initiates each action and the time.

Taking into account the fact that video material and high-resolution photos can lead to very large data file sizes, the instant invention may not require that the user to store the datafile within its system. In some embodiments the owner would be allowed to store the subject file remotely along with the generated hash value and signature on the server where the file resides. This file might be stored in a decentralized manner or on a different server. In that case the uniqueness of the hash value could be secured by either of a reference to the external storage address while simultaneously administering the hash value and the metadata internally within the system. Additionally, or alternatively, the instant invention allows for split hash values, e.g., for very large data items the system could generate partial hashes and combines these partial hashes in one hash value package to allow a more efficient and quick identity verification.

Various embodiments of the invention disclosed herein will store the time during which the item will be subject to licensing. This definition could be stored in the database and after the expiration of the defined availability time the system would place the license in a "lapsed" state. At the end of the period during which the work could be licensed, the work could either reject any further licensing attempts or make the work available for general use but continue to record access to the work. In case of further use of the multimedia work after the lapse of the availability time, the content owner could initiate legal measure and is able to utilize the recorded usage data as proof of access.

Another functionality of the instant invention touches on copyright rights as well as adjacent areas of law (e.g., privacy, personality rights, right of publicity, right of privacy, etc.). The instant invention could be utilized to help protect the rights of the owner. For example, in case of copyright the system can operate as aid in verifying authorship and copyright ownership of a work. In case of personal rights, the instant invention allows for the integration of information relating to agreements directed to the personal rights of participants in multimedia works. In case of potential law suits the instant invention can be utilized as a proof and documentation platform, wherein the signed entries and timestamps can be utilized to resolve potential disagreements.

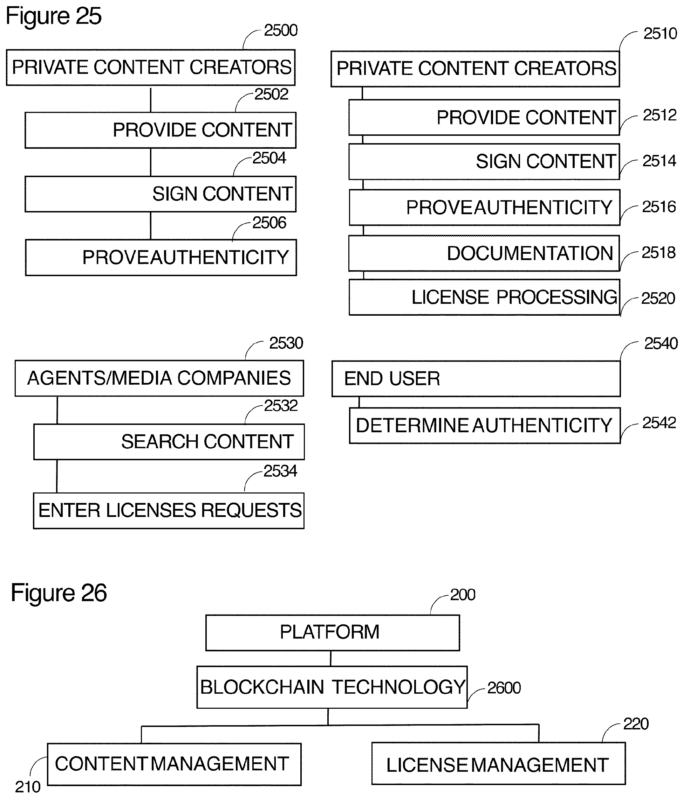

The instant invention, as disclosed in Figure 25 addresses a number of user groups, with potential advantages for every group. For example, private creative content creators **2500** can provide the content **2502** and efficiently and quickly sign their photos **2504**, videos, texts, or graphics and are able to prove that they were the one who generated the work **2506.** Thus, the system provides a method of allowing creators to establish creation rights protection for their works. Professional creative content creators **2510** would benefit from the documentation **2518** and the potential to process license requests in a matter of seconds **2520**, thereby avoiding the need to negotiate contracts manually via email. Agents or media companies **2530** benefit from the ability to search the available content **2532** and enter licensing requests **2534** without having to question the identity of the content creator. The instant invention provides certified authenticity and legal security. The end-user or public **2540** can to a point ascertain if a multimedia work has been signed by the alleged content creator **2542**, thereby making it more difficult to upload fake content.

In the digital world it is increasingly difficult for content creators to protect multimedia content from plagiarism or unlawful use. At the same time, it is also difficult for the public to discern if content was actually created by the person who published it or if an AI has generated it. The instant invention provides an approach that tackles both problems at the same time with cryptographic and signature processes which could potentially lead to changes in social networks. For example, social networks that adopt the instant approach that increasingly utilize signed content because of the verification of authorship. The creative industries will tend to adopt the approach taught herein in order to benefit from a standardized method of enforcing copyright and other rights without the need to involve external rights handling entities. This approach, if adopted, would tend to slow the development and distribution of fake news and deep fakes because the instant invention provides a method for authenticating contents that easily proves their authenticity.

One approach generates unique and secure content creator identities via the use of personal crypto-IDs and allows the linking of content with these IDs. The linked content will be a hash value of the media item along with the private key, thereby securing the identity of the content by verifying if content has indeed been signed with the private key of the content creator identity. With the provided license management system, the desired use of content can be regulated and administered transparently and verifiable. Such an approach can effectively change the landscape of digital content by establishing an authenticity proof for manual generated multimedia works and minimizing the imbalance between professional and non-professional content creators.

The instant invention also provides a functionality that reaches and encompasses a large part of the digital media industry and helps counteract the rising problem of fake content or unauthorized use of content. By utilizing various embodiments, the instant invention increases the legal security for content creator and licensees, without additional technologies. However, the basic functionality allows for the general application and also provides potential for additional enhancements.

The instant invention as has been disclosed above is directed to a system **200** for secure administration and signing of digital content **210**, wherein a personal individual crypto-ID is being utilized to secure and protect the authenticity of humanly generated media items (photos, videos, audio, text) and additionally provides a platform for licensing the publishing of the content **220.** As is disclosed in Figure 26, this particular general approach is also preferably extendable with integrating blockchain technology **2600.** This integration is utilized to store authentication and licensing data that have been up to now stored in a central database additionally stored in an invariant, decentralized structure - a blockchain. Such an integration would provide a number of improvements.

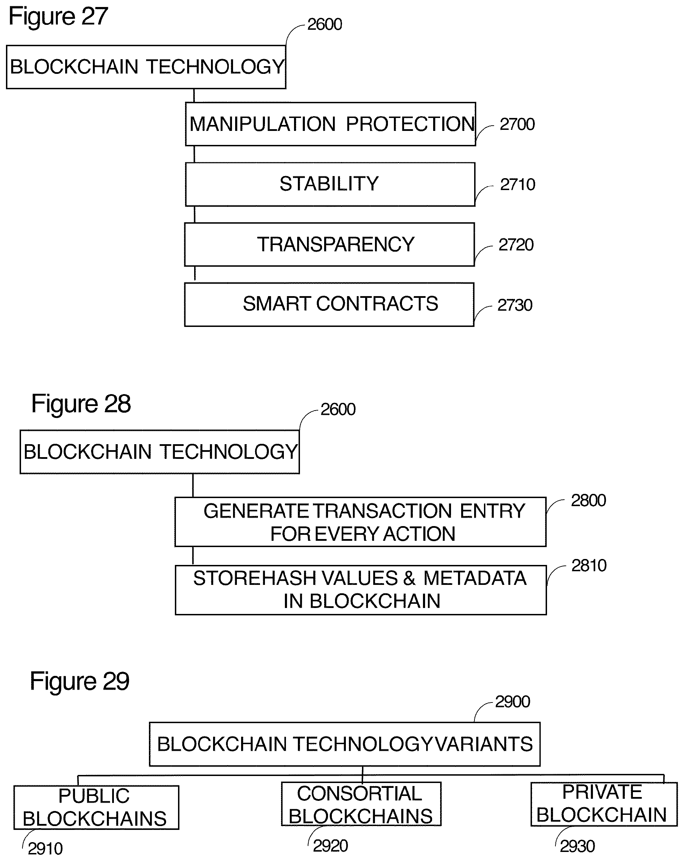

The following improvements, as disclosed in Figure 27, would be added to the functionality of the instant invention by blockchain integration **2600.** The first potential added value is an increased protection against manipulation **2700**, because entries in the blockchain cannot easily be modified retroactively, which tends to raise the authenticity level of the stored content and the licensing data. A second improvement is securing the stability of the system **2710.** This happens because utilizing a public or consortium blockchain would lead to a distribution of the data storage onto many network nodes. This has the advantage of increasing the stability of the system since failure of individual nodes would not lead to a breakdown of the whole system. Another improvement is a long-time transparency **2720** wherein every transaction (e.g. generation of a personalized crypto-ID, signing of a multimedia item, granting of a license) will be stored as an unchangeable history, which is completely retraceable for many years. As a fourth improvement the blockchain integration can be utilized as the foundation for so-called smart contracts **2730**, which allows the system to automate parts of the administration licensing process, for example it might be possible to establish the automatic issuing of a license if predefined conditions have been fulfilled. This improvement combines the rights management functionality from the base system with the strengths of the block chain technology, which brings enormous advantages specifically for large platforms, content provider or complex copy right settings.

Turning next to Figure 28, wherein it is disclosed that the previously described central data storage approach will be extended with a decentral component, wherein as disclosed in the initial approach all data is stored in a traditional database, the utilization of the block chain technology generates a transaction entry for every action initiated within the system **2800** (e.g. upload of a data item, issuance of a license) within the blockchain. The hash values of the digitally signed values and the metadata associated with the data items (e.g. creation date, participating users) will be stored in blocks of the blockchain **2810.** Additionally, this enhancement allows for the utilization of smart contracts to automatically manage or limit parts of the licensing process (e.g. geo blocking, or time relevant settings). With this enhancement all participating parties (content creator, licensee, external users) can benefit from a high amount of reliability because the entries in the blockchain can be verified independent from the platform itself, as long as the blockchain-ledger is either publicly accessible or accessible in a consortium blockchain (for authorized nodes).

The blockchain module that can be integrated into the functionality of the instant invention is not fixed to a specific blockchain technology. Turning to Figure 29, a plurality of different variants might be utilized, wherein public blockchains **2910**, like Ethereum, Polygon or other EVM compatible chains can be implemented. The advantage of implementing public blockchain technology is a high amount of transparency, because everyone can track transactions. The disadvantages are potential transaction costs, the gas fees and potential scaling bottlenecks. Consortium Blockchains **2920**, like Hyperledger Fabric or Quorum might also be implemented, which has the advantage of a more limited number of participants (e.g. media companies, collecting societies), lower transaction costs and better scaling. This at the disadvantage of less publicity, with a potentially lower visibility for end users. A third blockchain technology **2930** that might be implemented is a private blockchain which is most useful for corporations or organizations that are running an internal network. The advantage of this technology is the complete control over infrastructure and access rights with the disadvantage that this solution would not provide a decentralized approach and would also have limited or less external credibility if only one operator is involved. The instant invention can be utilized with all these scenarios and technologies, and others not mentioned, wherein it is critical that the implementation provides an unchangeable transaction history, e.g., one that stores every authentication and licensing transaction.

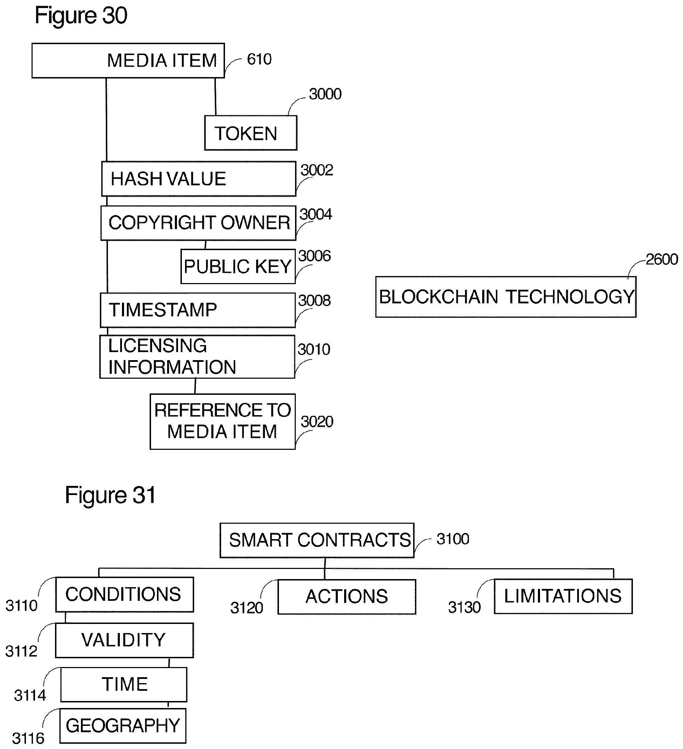

Turning next to Figure 30, utilizing the blockchain technology **2600** implies that every digital item **610** that is provided to the instant invention will be associated with a token **3000** on the blockchain **2600.** This token preferably will contain the hash value of the medium **3002** (e.g., calculated via SHA-256), the identification of the copyright owner **3004**, its public key **3006**, the timestamp of the entry of the digital medium into the system **3008** and the licensing information **3010** or at least a reference to an open smart contract that manages this information. The actual media item **610** does not need to be stored in the blockchain although that is certainly a possibility. One reason for not storing it there is because it would lead to higher storage requirements and could become be too expensive. Instead, the blockchain stores the hash value **3002** (for integrity), the reference/link to the actual media item **3020** (as IBFS-hash or URL) and information about the license **3010** or access rights in form of a smart contract logic. This leads to a small, manipulation resistant data track that cannot be modified retroactively.

The opportunity to introduce smart contract logic **3100** into the licensing process is one advantages of the integration of blockchain technology into one embodiment approach of content protection with a personal crypto ID, wherein these smart contracts are being utilized to automate licensing processes. A smart contract can regulate a number of different things, ranging from conditions **3110**, over actions **3120** to limitations **3130.** The conditions step **3110** handles things like validity **3112** (e.g. valid until date X **3114**, or only valid in region Y **3116**, etc.). The actions step **3120** activities after finalizing a contract (e.g. the license will be set active, not set to active until the licensee transfers a token of payment, etc.) and the limitations step **3130** contains automatic blocks of the smart contracts after the expiration of the defined license term. The smart contract logic removes the requirement to do manual tracking of license settings. The contract manages the tracking automatically and notes every activation or deactivation in the blockchain.

The utilization of blockchain technology **2600** additionally provides the following example advantages for the approach of content protection with a personal crypto ID. First, the blockchain approach provides global verifiability, i.e., as as soon as the data related to a digital medium has been entered into the blockchain, every interested party can find and examine the associated data record. Another advantage would be protection against deletion, i.e., even if the proprietor of the particular base system shuts down the service or is intentionally manipulating data, the entries stored in the blockchain are existent on many nodes of the blockchain. Further, blockchain integration provides ready access to a transaction history that is unalterable. Every change of the license state or a change in ownership is being entered into the transaction history and stored. With the addition of blockchain technology the invention raises the level of trust in digital authentication and helps making the ownership on media item clearly identifiable and comprehensible.

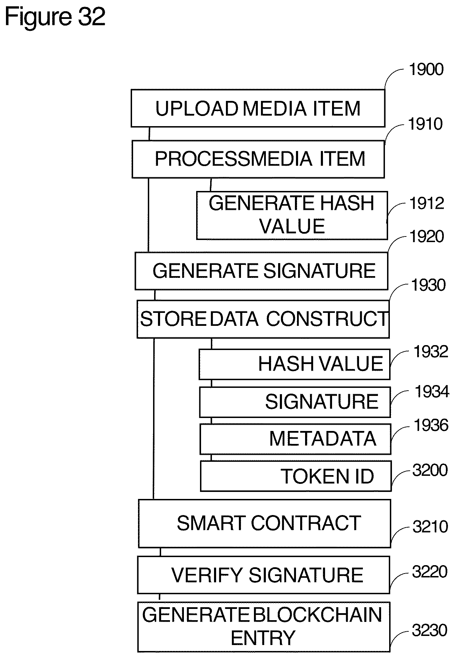

Integration of blockchain technology into the previously described workflow starts after the initial upload of the digital medium into the system and is illustrated in connection with Figure 32 in which, as one possible first step, the digital medium will be signed with the personal crypto-ID of the content creator. Then as a next preferred step the system will generate a data record that will contain a token-ID **3200**, the hash value of the digital medium **1932**, the signature **1920** and the creation time (stored as part of the metadata 1936). This data record will then be sent to a smart contract **3210** processor, which will processes the input data by at least verifying if the signature is valid **3220** and if the transaction has been signed by the owner of the crypto-ID, for example using a wallet. If this validation step is successful, the instant invention will in the next preferred step generate a new entry in the blockchain **3230**, which can be used to authenticate the existence of this token. This process generates an unalterable record that user X signed digital medium Z at timestamp Y and added it into the blockchain.

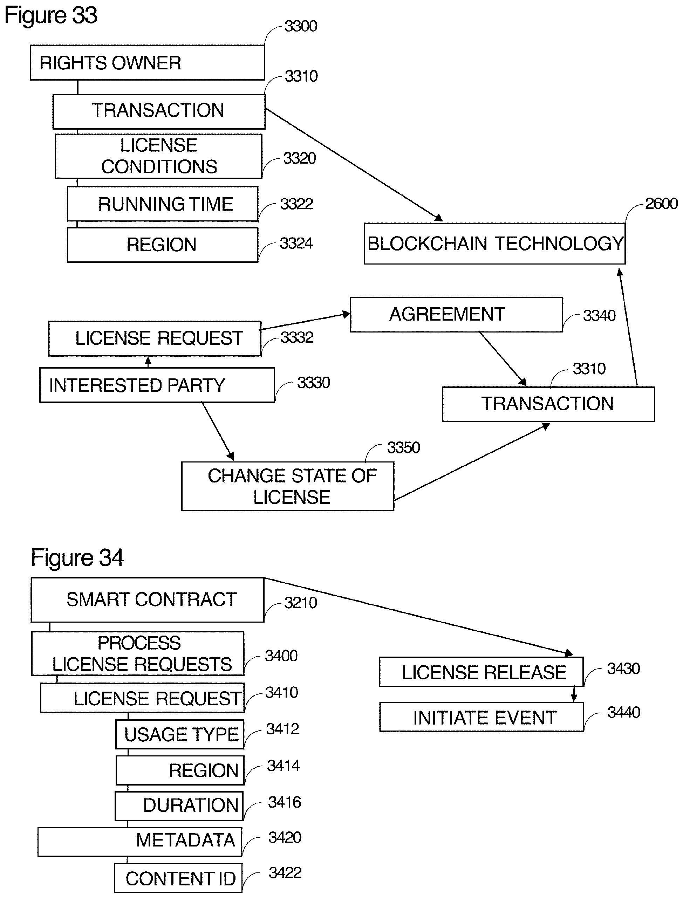

Turning next to Figure 33, the integration of the blockchain technology **2600** also in various embodiments incorporates the licensing transactions that are part of the previously disclosed workflow and are preferably initiated after an interested party **3330** communicates a licensing request **3332** to the system of the instant invention. The rights owner **3300** initiates a transaction **3310** in the blockchain which contains information about the licensing conditions **3320** (e.g., license duration **3322**, region **3324**, etc.). If the interested party and the rights owner come to an agreement **3340** the instant invention initiates an event within the blockchain **2600** (e.g. a License Granted event), wherein this event marks the change of the state of a license **3350** from "no state" to an "active" state. The processing and provision of actual payment may also be processed in crypto currency, wherein the main focus is to establish data about the license contract in the blockchain.

The fact that changes to licensing conditions or a cancellation of a contract are also stored as transaction in the blockchain helps to make comprehensible how the licensing history has developed. A change in licensing conditions will be entered into the blockchain into the appropriate fields and, in case of cancellation, the copyright owner initiates a transaction that changes the licensing state to "revoked". All of these activities will be recorded in a block and the block is specifically not modifiable retroactively. The protection of data records against retroactive manipulation or deletion is one of the main advantages of blockchain integration. This is because multiple mechanisms that are part of the blockchain technology are utilized to achieve the goal of making sure that changes to the blockchain network can only be accepted when the majority of the nodes are affirming these changes. Furthermore, interlinked blocks with cryptographic hashes make it almost impossible to change an entry, without having to rewrite all subsequent blocks.

Adding the blockchain technology helps raise the trust in the platform, because even if the operator of the system deletes or changes the internal database, the blockchain entry would still be comprehensible for every participating party. A public or consortium ledger guarantees the independence from a central authority. All of the previously mentioned potential participating parties' profit from integrating blockchain technology into the method of the instant invention. For example, media companies that are setup to act in a multinational fashion benefit from a consortium blockchain because this would guarantee that all daughter companies would share the same unchangeable data foundation for licensing rights. Preferably if a license for a digital video item is being sold in country A, this license including its associated conditions is immediately visible to participants in country B. Multiple independent artists working as a collective can share one blockchain to register their works. Each artist can verify who uploaded which work at what time, without having to blindly trust one central authority. Additionally, the functionality of an embodiment is also applicable to platforms providing photo databases for stock material that would preferably be able to associate themselves to generate a decentral infrastructure, wherein every photo is provided with an on-chain token. Utilizing this infrastructure users can easily identify the authenticity of the photos by requesting and verifying the token hash value stored in the blockchain.

The integration of blockchain technology into the standard functionality of the instant invention generates new requirements and possibilities to the system of the instant invention. As an initial step, blockchain connectivity to the base system needs to be established and secured. The operator of the base system will preferably operate nodes or will need to join an existing network. Additionally, public blockchain technologies like Ethereum function with gas costs, gas fees or transaction fees which is the payment users make to have their transactions processed and validated on a blockchain network. Therefore, every transaction, interaction (e.g. upload, license change) with the platform requiring blockchain functionality which may incidentally generate fees, potentially required by the system added mechanisms for cost recovery. Also, the performance of the system after integration of the blockchain technology is of high importance, because, depending on the blockchain, it can require several minutes until a transaction has finally been verified. The user interaction therefore has to be implemented asynchronously, providing the user with a preliminary confirmation for specific steps or actions. Independent of this added level of complexity, the increased decentral organization adds considerable advantages, especially in view of the unchangeability of the stored data.

One positive advantage of the blockchain integration is, as has been disclosed, for example, in Figure 34, the integration of the smart contract concept **3210.** The smart contract process intakes license requests **3400** and integrates the license request **3410** plus the associated meta data **3420** into the system. The associated meta data might include the ID of the content **3422**, the requested usage type **3412**, the desired region **3414** and duration of the license **3416.** Additionally, smart contracts can automatically provide the release of the multimedia item according to the license **3430**, as soon as specific requirements have been fulfilled. For example, the payment might be via a blockchain token. Also, smart contracts initiate so called events **3440** that are directed to provide external parties real time information about newly generated licenses or modified licenses. Therefore, the system of block chain integration into the functionality of the instant invention with the smart contract provision provides a protocol that stores every relevant change associated with a digital item in a transaction with the blockchain, ultimately leading to a sequence of specific states that allow everyone to comprehend how any license developed over time.

Despite the advantages of the blockchain integration in terms of security and transparency of the system, a couple of issues regarding privacy protection might arise. The approach stores personal data, e.g. the name of users or extensive media metadata in the blockchain and this has the potential to generate conflicts with local privacy laws. To address these potential conflicts the instant invention might utilize pseudonymization and off-chain storage, wherein pseudonymization means storing an anonymous ID in the blockchain instead of the real name of the media owner, with the base system storing the information which relates the anonymous ID with the actual user's identity. Off-chain storage is intended to be used when the hash-values of sensitive personal data are to be stored in the blockchain, with the actual personal identity of the user being stored in a conventional database. These points combine the advantages of maintaining the unalterable data integrity of block chain storage while protecting the privacy of users who require it.

As should be clear, each time a digital media item is modified its hash value will change. For example, if a content owner modifies a photo and provides it to the system the modified digital item will be entered into the blockchain as a new version of an existing work as long as the digital item is digitally signed with the identical crypto-ID. The system will generate a new blockchain related transaction for every change to the digital media item which will serve to document the different versions. Such an approach would generate a version chain, making it possible for users to view the history of a digital item with the knowledge that using the blockchain technology as infrastructure means the process is resilient against manipulation. The link between the different versions will preferably be implemented via an entry in the metadata of the new version illustrating the relationship with the earlier version as, for example, a parent - child relationship.

The integration of blockchain technology might be implemented according to the following approach. Previously discussed is the generation of a personal crypto-ID the user obtains after uploading digital media items to the platform pursuant to the inventive system. After the digital work is uploaded, the blockchain functionality, which will preferably be implemented as an integrable module, will be activated. The user will generate and deposit a blockchain compatible wallet, for example a MetaMask wallet compatible with Ethereum. The blockchain functionality **3500** then handles the media item within the confines of the instant invention. Therefore, the user selects a digital media item for upload to the platform **3510** and the instant invention will calculate a hash-value **3520** and inquires the user if an on-chain entry in the blockchain **3530** should be generated. In a next preferred step, the system will generate a signature with the private key **3540** of the user, wherein the signature validates the ownership by the user of a particular digital media item. The generated hash-value **3552** and the associated metadata **3554** of the digital media item will be written into a smart contract as a blockchain transaction **3550.**

The on-chain entry will be acknowledged in the blockchain ledger after a consensus licensee and licensor has been reached. The generated and stored smart contract **3210** will then manage the complete licensing section **2000** of the instant invention. Once an interested user **3330** requests the use of a digital media item **3332**, the instant invention will generate a licensing transaction request **3310** associated with the license, which the rights owner **3300** can approve **3600** or deny **3610**, with each activity being represented as an individual transaction in the blockchain. Every party participating in the system taught herein can query the transaction history to determine the state of the license. With the addition of blockchain technology into the elemental functionality of the instant invention, the system combines a centralized structure with the web-based platform and provides a decentralized structure with the blockchain technology with multiple redundancies regarding the data accessibility.

The integration of the blockchain functionality helps to raise the level of trust in the system. Even if the central platform is not presently available, the public or consortium blockchain remains accessible to determine when a digital media item has been registered and if a license is available. Additionally, this approach makes possible an automated compensation or a secondary market. Automated compensation means that each potential smart contract can be associated with payment functions (e.g., tokens, stablecoins) which allows the system to automate the complete process of purchasing a license. The secondary market includes provides users of the instant invention the opportunity to trade with individual licenses or even trade complete rights on digital media items by transferring these licenses or rights to a new or different crypto account.

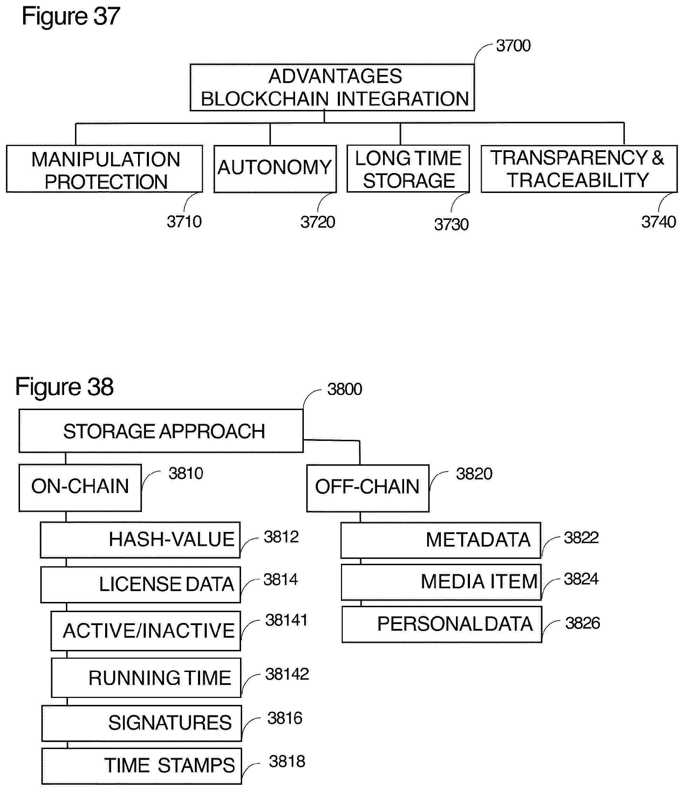

The blockchain integration therefore provides at advantages **3700**, as illustrated in Figure 37, starting with a high protection against manipulation **3710**, wherein once entered entries are virtually not changeable. The next advantage is high transparency and traceability **3740**, wherein every participant on the system can review the history of a digital medium, as well as the licenses and hash-values, depending on the associated access rights. Furthermore, the fact that the blockchain technology is not depending on a single server or a singular institution emphasizes the strong autonomy **3720** provided with the blockchain integration. Also, a token-related approach of the sort disclosed herein potentially allows for novel trading concepts, for example concepts similar to those associated with NFTs - Non-Fungible Tokens. Finally, the blockchain functionality provides long term storage **3730** of the media item so that ownership and can its status at any point in time can be judicially established.

Blockchain integration provides an increased level of trust and transparency in the media licensing and ownership process. It combines the established and disclosed idea of a personal crypto-ID and signed content with an unchangeable, decentralized storage. Utilizing this storage concept, the authorship, the authenticity of the digital media items and the granting of usage rights can be performed using a centrally located in a database and be recorded decentralized and protected against manipulations. This provides opportunities for a number of different industries, agencies, collecting societies, individual content creators, media companies and even independent collectives to utilize these technologies to drastically reduce the chances that fakes will be mistaken for originals, that fraudulent activity can be performed, and the uncertainty as to the copyright and/or licensing status of a media item.

The integration of blockchain technology into the base system must take into account its limited storage capacities and transaction costs. As is disclosed in Figure 38, to address these limitations one embodiment utilizes a separation in the storage of data **3800** on-chain and off-chain, wherein on-chain **3810** means that the data should be stored within the blockchain and off-chain **3820** means that data should be stored separately in a specific database. According to the preferred embodiment the system will store the hash-value **3812,** essential license data **3814** and time stamps **3818** and signatures **3816** that are key in identifying a particular process within a blockchain transaction. The essential license data **3814** might include, for example, information that indicates whether the license is active or **not 38141** and the duration **38142** of the license. The off-chain storage associated with a digital media item might include detailed metadata **3822** associated with the digital medium, for example title and description, creation date, attributes of the raw data set, the complete media item (photo, video, audio) **3824,** etc., and also personal data **3826** which should only have limited availability to the general public, e.g., the real name and exact addresses of the owner or licensor.

After the user uploaded a digital media item, the instant invention generates an initial dataset, that is recorded in either a smart contract or in transactions. This dataset refers, either via an URL or an IPFS link, to further details, that are stored in a classical database or a decentral storage unit (IPFS). With this approach the blockchain integration combines the unchangeability of the blockchain functionality with the flexibility of conventional data storage.

The instant invention provides interested parties (licensees, journalists, end users, etc.) the opportunity to verify if a particular digital media item an entry is available in the blockchain and if the stored hash-value of the digital media item matches the stored value. The instant invention will be able to be configured to provide this functionality in a number of different ways. One approach would be to provide a web-based user interface for verification purposes. Then, when provided with the digital media item or an actual hash-value, the instant system will initiate a blockchain search, as long as the blockchain is public or a consortium blockchain with read access. The instant invention will then either automatically initiates a search based on the provided data (name, or hash-value) or allow the user to manually search the blockchain. In another approach the instant invention might provide the user with the opportunity to calculate a hash value of the existing media item locally and provide it as query to the blockchain database. With these approaches the verification does not depend on the availability of the base system, because a direct blockchain query could be implemented utilizing different nodes of the blockchain network.

The integration of the blockchain technology might also include utilizing private or consortium blockchain solutions, where these different solutions feature alternative approaches in terms of accessing the data of the blockchain. In private blockchains the ability to initiate transactions is limited only to authorized participants and read access might also be limited. The private blockchain approach is suitable for company networks which are not intended to be available to the general public. In terms of consortium blockchains, anyone can access the data and transactions depending on the model of consensus can also be validated by anyone. This type of blockchain solution provides a high amount of transparency, however potentially incurs transaction fees. The embodiment of the instant invention preferably is configured so that the base system can flexibly handle both solutions. The blockchain technology is integrated in such a way as to make sure that the unchangeable transaction chain is kept intact, regardless of a public or consortium blockchain environment.

As has been disclosed previously, the instant invention utilizes and introduces smart contracts that address the licensing related points of the integration of the blockchain technology. Primarily the contracts manage transactions related to the media items and the licenses. A smart contract in pseudo code could look similar to the following:

```
 contract ContentRegistry
 struct ContentData {
   address owner; // public key / blockchain address of the rights owner
   bytes32 contentHash; // SHA-256 hash of the media item
   bool exists;
   // additional potential fields: timestamp, title, pot. link to IPFS
 }
 mapping(bytes32 => ContentData) public contents; // bytes32 -> ContentData
 event ContentRegistered(bytes32 indexed contentHash, address indexed owner);
  // registration of new content
  function registerContent(bytes32 _contentHash) external {
    require(!contents[_contentHash].exists, "Already registered");
    contents[_contentHash] = ContentData({
      owner: msg.sender,
      contentHash: _contentHash,
      exists: true
     // ...
    });
    emit ContentRegistered(_contentHash, msg.sender);
  }
```

That is one rudimentary example of a "contentregistry" contract, that for every hash of a media item, stores the information who (what blockchain address) owns this entry. A real-world implementation would potentially contain more fields, e.g. timestamps, metadata, or validity status.

In addition to the content registry contract a potential additional smart contract could be established and utilized for licensing questions. Such a contract could look like this: contract LicenseManager {

```
  struct License {
    address licenseOwner; // who is the license owner
    bool valid; // is the license valid?
    uint256 expiry; // UNIX-Timestamp, defining when the license expires
    // additional parameter: region, usage type etc.
  }
  // Mapping: contentHash => (licenseeAddress => License)
  mapping(bytes32 => mapping(address => License)) public licenses;
  event LicenseGranted(bytes32 indexed contentHash, address indexed licensee, uint256
 expiry);
  event LicenseRevoked(bytes32 indexed contentHash, address indexed licensee);
  // primary function : grant license
  function grantLicense(bytes32 _contentHash, address _licensee, uint256 _duration)
 external {
    // 1. examination: is sender (msg.sender) owner of the content?
    // 2. creation of a license entry
    // 3. definition oft he process : block.timestamp + _duration
    // 4. emission of an event
  // license revoking
  function revokeLicense(bytes32_contentHash, address _licensee) external {
    // 1. check: just owner or admin?
    // 2. definition of licenses[_contentHash][_licensee].valid = false
    // 3. emission of an event
  }
 }
```

This particular example shows how licensing contracts could be managed on-chain. The base system, the web or desktop client, communicates with this contract over transactions and signs every request, so that the network can verify that only legitimate rights owner can enter new licenses.

The integration of block chain functionality into the base system with the added smart contract mechanism additionally allows for the potential integration of a payment mechanism associated with the license grant. A potential licensee accesses the grantLicense function and simultaneously provides a specific amount using, for example, tokens or ether. The smart contract compares the amount with the number that corresponds to the demanded number. If that comparison is positive, the instant invention preferably writes the corresponding data into the contract and activates the license. The approach further integrates an automatic payout or transfer of the ether amount to the rights owner. This allows the establishment of a fully automatic paywall without the needing an external payment provider. In case of multiple rights owners sharing access to the system the instant invention also provides revenue sharing, wherein the smart contract can be defined to share the paid amount according to any predetermined allocation scheme.

An essential advantage of the blockchain integration is the possibility to utilize the technology to establish transnational contracts. More specifically, in case that media content is licensed in multiple countries it is very common that uncertainty or problems regarding the harmonization of different language and time zones occur. Utilizing the blockchain as the single source of truth will allow users independent of the country, or jurisdiction of each participating party to access the on-chain data in order to, for example, verify the status of a license. The concept of utilizing multiple nodes in different jurisdictions provides a high level of resilience. Both of these advantages will assist international agencies, media companies or artists profit equally from a central, unchangeable documentation that is not connected to one particular regional authority.

The blockchain integration also provides the ability for users to retrace every modification or interaction associated with a digital media item. The system will record every modification of the media item - even the smallest - as a singular transaction, thereby building a chronicle of all adaptations. The initial acceptance of a license associated with a digital media item will be recorded as a first transaction block that contains the information about the allowance of a license request, a potential change in duration of the license that might be first requested by the licensee and then accepted by the rights owner will also be stored as one particular singular transaction entry associated to the digital media item. Any change in the license values will be stored as described above as a singular transaction entry, leaving the initial entry into the register of transactions unchanged in the blockchain. Any following transaction related to the digital media item only mark the current state of the license, for example "valid" or "false" - any interested party can therefore review all revisions of activities on the digital media item since establishment into the blockchain system by the content owner.

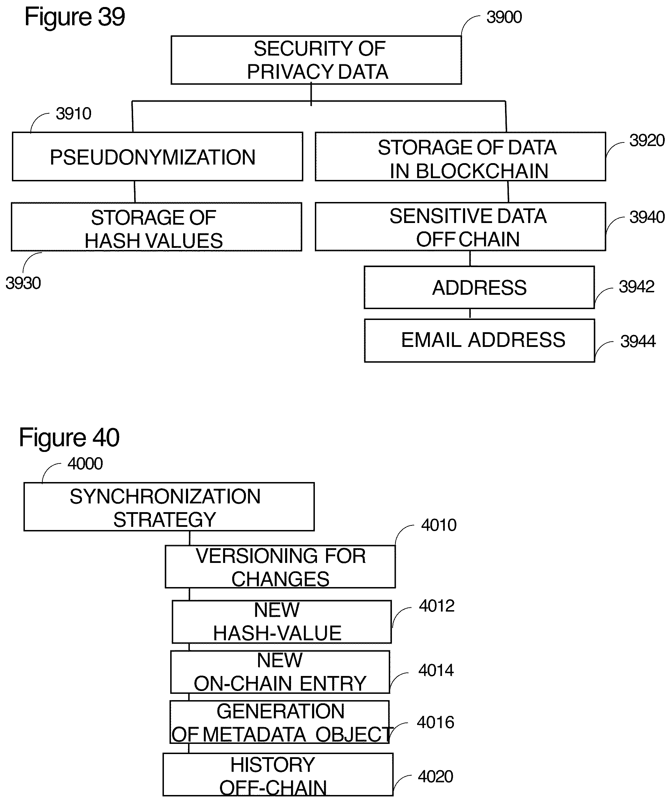

Blockchain integration stores data either completely or partially available to the public, which raises questions regarding the security of the privacy data **3900.** An embodiment invention addresses these points, as disclosed in Figure 39, by utilizing pseudonymization **3910** and storage of selected data in the blockchain **3920.** This approach is implemented by utilizing hash values instead of plaintext **3930,** wherein instead of the original name of a person, the system stores a wallet address or a cryptographic pseudonym. Further, this approach separates the data into sensitive data and less sensitive components, for example the address **3942,** email address **3944** are stored preferably off-chain **3940** and are only accessible via a link and not specifically stored on-chain. Since blockchain entries are stored permanently, private personal data that has been released unintentionally cannot be easily deleted. Therefore, the instant embodiment is designed to provide a methodology that guarantees that critical information does not end up in the blockchain, if need be, encrypted or in the form of hash values.

One of the major advantages that results from an unalterable chain of entries of transactions is strong provability, i.e., blockchain entries can be utilized as evidence to help determine: a) when a transaction was initiated and b) who initiated the transaction, the latter being true so long as the signature key can be assigned to a specific person without question. Further, the verifiable timestamp mechanisms provided by modern blockchain systems also can help clearly document that a particular media item was provided to the system or licensed to a user at a particular point in time. In case of disputes, one party can provide the public key and utilize the on-chain data as additional proof. The fact that a block exists in the history of a media item is proof that that the associated and stored action was initiated at the recorded time and the mapping of the private data to a particular party supplements the necessary authenticity.

There are numerous different blockchain implementations and they differ in part according to who is running the blockchain and what type of governance model is implemented. The public chain implementation of a blockchain features a decentralized governance run by participating miners and validators. This implementation provides the highest level of accessibility, however requires gas fees for every transaction and has the potential of network overload. The consortium implementation of a blockchain features an identified number and type of participants, for example collecting societies or media companies. The implementation provides a consensus system established by collectively run nodes with clearly defined user and access roles and policies. A private chain implementation is run by a single company and that company controls the nodes. Such an implementation can be utilized to apply blockchain principles onto internal processes. However, this private chain implementation has a stronger decentral direction.

The integration of the blockchain functionality is designed to be utilized as an extension of the crypto ID platform approach disclosed within this specification. Therefore, the integration of blockchain functionality will be configured to be based on the base system and is intended to add a number of elements to the workflow and functionality. One particular element that will provide the connection between the blockchain functionality and the base system is a particular blockchain connector, which is primarily an interface that provides the base system with the ability to send transactions to the smart contract functionality of the blockchain system. Additionally, the blockchain functionality necessitates a blockchain capable and compatible wallet functionality. That can either be added to the base platform functionality or added as a separate module. The most important module or building block that establishes the connection between the blockchain and the base system is the on-chain explorer, which is preferably a user interface block that provides users with the ability to query the system regarding its content, license status and the history associated with each multimedia item. The functionality might be implemented with the provision of an external blockchain exploring system or an integrated internal explorer, preferable being available in private or consortium blockchains. The upload and licensing process and functionalities of the base system will be enhanced through the addition to the storage of the content and data in a database. The system will initiate an on-chain transaction - this double storage approach provides a potential backup mechanism that raises the trust in the system. This is because the blockchain functionality and system will be governed by third party and publicly accessible rules.

The combination of the base system and the blockchain functionality provides a number of advantages however it also potentially introduces problems. That is, the simultaneous on-chain and off-chain storage of changes to a media item provides a potential discrepancy regarding the storage of the associated data. With respect to this particular potential problem, the instant invention, as illustrated in connection with Figure 40, introduces a synchronization strategy **4000** that proposes versioning **4010** for changes to the media item, wherein every significant change of a media item, generates a new hash value **4012** and also a new on-chain entry. The old on-chain entry will be kept. Additionally, to the generation of data entries on-chain **4014** the instant invention archives an information storing a notice about the connection between each on-chain entry **4020,** this preferably off-chain and with the association to the media item. Login every change to the media items will be combined with a generation of a metadata object containing the metadata **4016,** hashing this metadata object and anchoring this value on-chain. This allows the system to also protect the authenticity of metadata.

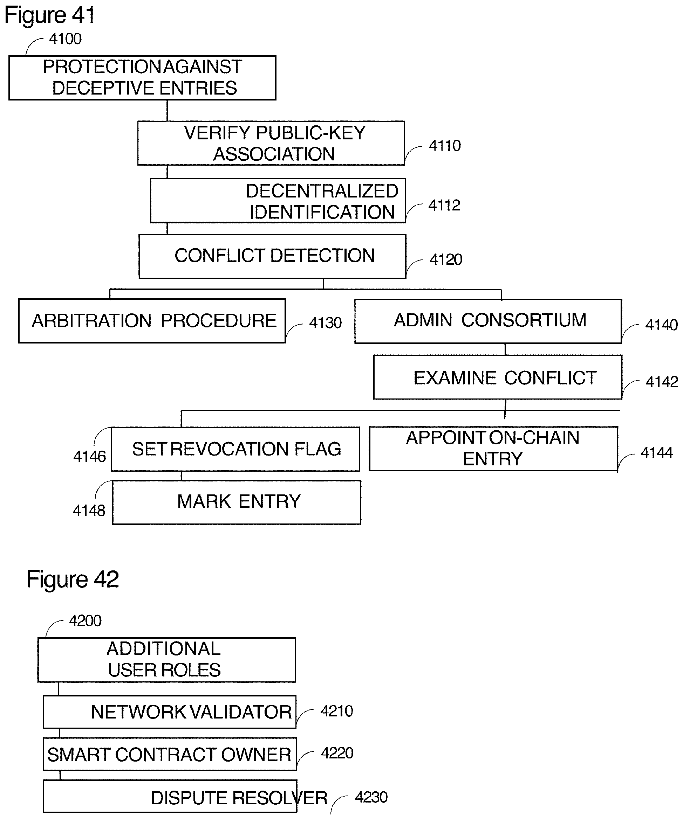

In addition to protection of data integrity, an embodiment also provides protection against invalid or deceptive entries in the blockchain **4100,** which is illustrated in connection with Figure 41. As is illustrated, a potential attacker might attempt to integrate a digital media item into the blockchain for which he or she is not the content creator. The presently preferred system uses the crypto-ID to prevent wrong entries. However, the blockchain functionality additionally necessitates that the association of the public-key address to a person must be verified **4110.** The instant embodiment provides an identity layer in form of decentralized identifiers **4112** which verify off-chain to see if the private key is indeed associated with the actual content creator. If a conflict is reported in the verification step **4120** (e.g., a media item was added without approval of the content creator) this embodiment introduces an arbitration procedure **4130** or provides for an admin consortium **4140** that examines the reported conflict **4142** and appoints an entry on-chain **4144** or sets a revocation flag into the system **4146** and marks the entry as controversial **4148.** Early detection of abuse is thus made possible.

The disclosure associated with the crypto ID-integration introduced a system that will provide roles for participants in the system including, for example, rights owners, agencies, media companies, end user and administrators, etc. Integration of blockchain functionality will likely involve a number of user roles **4200,** as illustrated in Figure 42. Additional roles might include network validators **4210,** wherein in public chains these individuals might be miners or stakers that validate transactions. In consortium chains the validators will preferably be the assigned operator of the nodes. A further role introduced by the blockchain functionality is the smart contract owner **4220,** which will preferably be the user or institution that initially generates the smart contract on the block chain. This particular role might also be provided with extended administration functions. Additionally, a role that is responsible for resolving disputes **4230** might be made available in the system. This role could be assigned to a single person or a board that will be able to conduct on-chain locks or markings in the event that that are not automatically resolvable. The example roles described above are designed to enhance the system without subjecting users of the base system to multiple new processes. The integration of the blockchain functionality will be invisible for the most part to the user and will utilize an unchanged user interface.

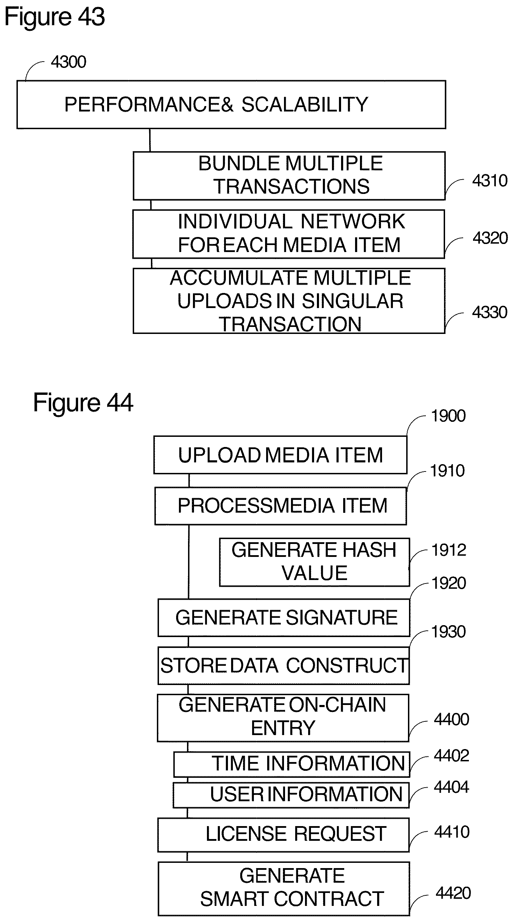

One important factor when integrating the blockchain functionality into the base system, as is disclosed in Figure 43, is performance and scalability **4300.** The enhanced system, specifically the blockchain, needs to be able to keep up with high data volume and a large number of transactions. That is, for purposes of the instant disclosure keeping up means that the system needs to guarantee that not every action will require excessive gas fees or that the reaction time is too slow. To address these potential problems the instant invention may utilize a number of approaches to raise the scalability of the system. The blockchain integration preferably bundles together multiple transactions **4310** before entering and incorporating these into the main-chain ledger, thereby introducing a so called 2-layer network layout approach. Additionally, the instant invention might handle every upload and processing of each provided digital media item in an independent network that is only connected to the main network of the blockchain on demand **4320,** i.e., that it is connected to the main network only when uploading or receiving data. Furthermore, the blockchain integration might incorporate a system to accumulate multiple uploads of digital media items **4330** and anchor these in one single transaction (e.g., a Merkle tree). This enables the system to summarize, for example, 1000 media hashes in a single root-hash. Each of these individual solutions are useful and might be selected completely or individually either by the user, or automatically by the system depending on the situation. These solutions allow the instant embodiment to integrate the blockchain functionality effectively, even if there are a high number of uploads and licenses being issued without allowing an individual action to become too expensive or too slow.

The blockchain functionality might be made a part of the base functionality utilizing the crypto-ID as has been disclosed of, for example, a stock photo administration platform that receives thousands of photos per day. The blockchain functionality, as disclosed in Figure 44, might at record and then enter each uploaded photo **1900** with a hash value **1912** and signature **1920** into the database of the system **1930.** Then in a next preferred step the system will generate an on-chain entry **4400** for each photo, which might be generated in intervals or via batch processing. This on-chain entry is utilized to document when **4402** and which user **4404** provided the photo to the system. In the event that an interested party accesses the system and enters a licensing request **4410** which the photo owner approves, the instant invention will invoke the system a smart contract **4420** function, which logs into the chain that an interested party has purchased the rights to the photo from the photo owner according to payment operations preferably provided by the instant embodiment. During the above disclosed process the end user or other platforms can access the system and the blockchain to verify the authenticity of a different photo before utilizing the digital media item.

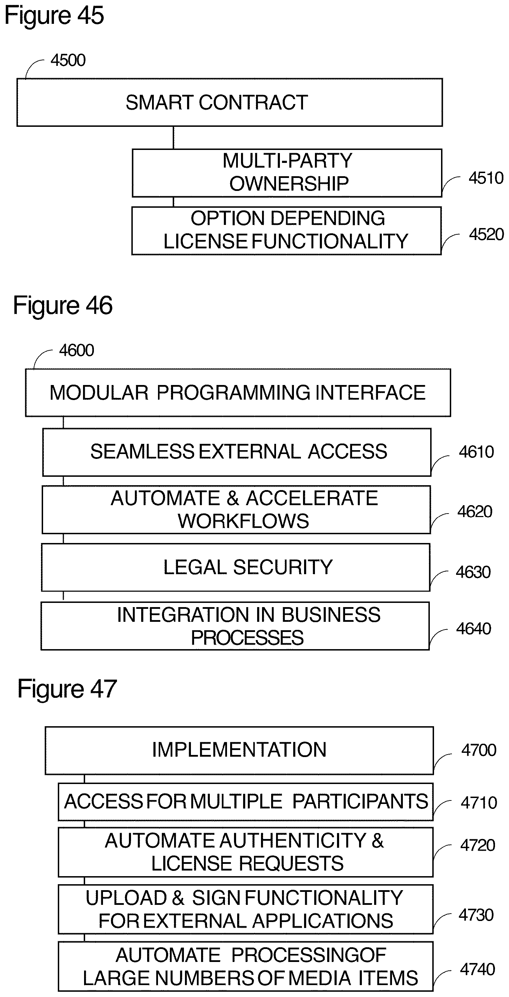

The instant invention also provides an opportunity for participating parties to submit video multimedia works to the platform. These works might take the form of, e.g., short films, documentaries, animations, etc. The blockchain functionality of an embodiment accommodates this type of media. For example, as disclosed in Figure 45, the blockchain integration will map the multi-party ownership **4510** in a shared smart contract **4500,** because very often multiple parties have a share in these sorts of media items. Additionally, the blockchain integration will preferably provide for the generation of automatic geographical limitations, e.g., a smart contract could be configured so that a license stored on-chain only will be activated after specific tokens have been fulfilled **4520** or when a separate smart contract function directed to the geographical region is being set to positive. The blockchain integration therefore clearly provides the technical base to set up, process and document specific validation requests tramper-proof.

An embodiment can also be utilized as repository of music or audio, wherein audio tracks, podcasts, music pieces or other music material might be submitted and stored in the blockchain registry. The music item will, after provision to the system, be signed and the smart contract will contain information regarding who is creator is and when the music item was registered within the system. Additionally, the license management aspect can be adapted to the music or audio material, so that interested parties such as radio stations, or podcasters can activate an on-chain transaction. The activation of the license for audio material can be customized to their platform with an potential addition of a micropayment or pay-per-play model. This allows audio material to be processed via a decentral compensation and tracking solution.

The disclosed addition of the blockchain functionality to the base system is a milestone in terms of advancement of the system. Blockchain technology has been introduced and integrated herein as a decentralized, unalterable storage solution for digital works, hashes and license files. The generation and utilization of the smart contracts assists in the automatic administration of license rights. By combining these approaches, the trust and longtime safety of stored media items will be drastically increased. Blockchain integration differs from the centralized approach of the base system in that it opens multiple new opportunities starting including globally accepted proof of authorship, automatic verification of license terms and verifiable timelines associated with all changes to a particular multimedia item. The addition of the blockchain functionality potentially adds additional constraints, e.g., transaction costs, or data privacy questions. However, the various embodiments address these points and the gain of in functionality in terms of transparency and protection against manipulation compensates for these constraints in view of many user groups. Therefore, this enhancement provides a robust, future proof base layer for digital content rights management and licenses that protects and further raises the credibility of humanly created cryptographically signed content.

In addition to the above disclosed potential integration of the blockchain technology into the functionality of the crypto ID approach, the instant invention might additionally, as disclosed in connection with Figure 46, integrate a comprehensive, secure and modular programming interface **4600,** which provides seamless access **4610** for social media platforms, editorial office of publishing companies, agencies and other service providers to the media, with signatures and licenses stored in the discloses base system. Such an approach and addition will automate and accelerate the existing workflows **4620,** generates legal security **4630** and lowers the barrier for big institutions to integrate the system in their business processes **4640.**

Such an integration of a comprehensive, secure and modular programming interface, as illustrated by Figure 47, also preferably will utilize a scalable and standardized implementation **4700,** that provides simultaneous access for multiple participants **4710** so that third-party systems, e.g., social-media platforms, content management systems and publishing companies, etc., are able to quickly and automatically initiate authenticity and license requests **4720,** without manually accessing a web interface. Additionally, such an interface would also allows applications (e.g., mobile applications) to directly initiate uploads and the signing process **4730.** Also, agencies and firms can feed large numbers of files or requests into the system **4740** without manually utilizing a web interface. Such an integration would make the system with all its mentioned enhancements a candidate for being universally applicable to tracking, identifying, and licensing media in the digital ecosystem. This provides institutional users an efficient automatization which is especially of interest in the event that hundreds or thousands of files need to be uploaded and licensed daily.

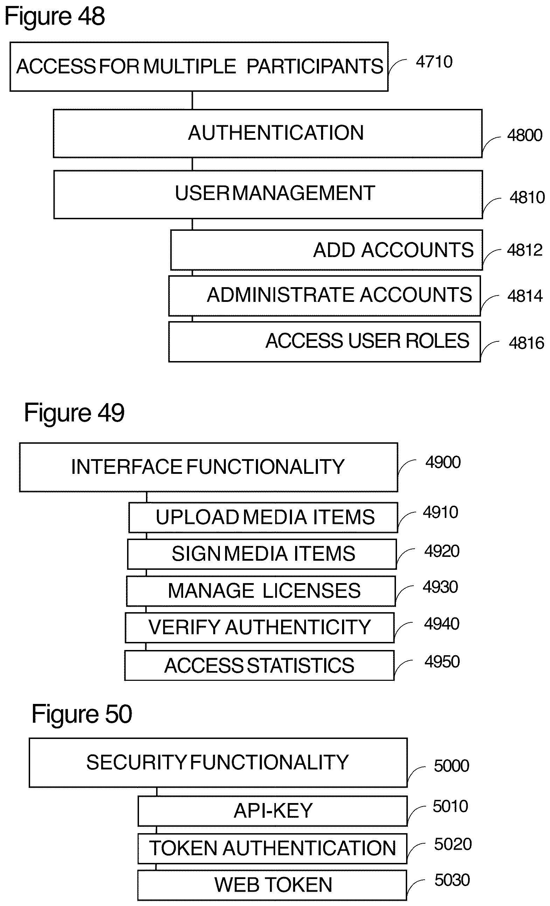

The modular programming interface that will be integrated into the base system will preferably provide multiple functions to participants as illustrated by Figure 48, starting with authentication **4800** and user management **4810** which is part of the method a user establishes a new account **4812.** Additionally, the user will be able to administer existing accounts **4814** and also access user roles **4816.** Securing the authentication process ensures that only legitimate partners can access the system of the instant invention. Additionally, and as is disclosed in connection with Figure 49, the base system is supplemented with interface functionality **4900** associated with the uploading and signing of digital content. This makes it possible for external parties to upload digital media works (e.g., photo, video, audio) directly via, e.g., a REST or GraphQL endpoint **4910.** The base system will automatically initiate the hash calculation, generate a signature and transfer all relevant metadata. Additionally, the interface integration might **4920** automate and handle license inquiries and license requests with some embodiments allowing external 4930 applications to inquire as to the licensing status of specified content and, for example, determine if a valid license is already available for a given hash tag. Functions that might be provided by one interface embodiment would allow authenticity verification **4940,** wherein an endpoint receives the hash of a digital media file and signals to the user whether the digital media file has been signed and by whom. Additionally, associated data such as time stamps and user identifications and reporting and statistics **4950** might be reported. Further, the programming interface of an embodiment will provide reports regarding usage volume, active licenses or expired releases of content. Such a reporting and statistics functionality is useful for agencies that administer large content portfolios and intend to track the usage of that portfolio. Also, such a programming interface functionality defines how these API endpoints are technically configured and what security measures take effect and how these measures are integrated into the workflow of the base system.

The technical configuration of the programming interface might be integrated, standardized and modular. Potential preparation might be via RESTful endpoints, which comprises unique URLS (e.g. /api/v1/upload - /api/v1/license - /api/v1/auth) and the utilization of http methods (e.g. POST, GET, PUT, DELETE) for display of activities. An alternative selected approach might be GraphQL where one endpoint is utilized (/graphql) that can be used to send complex inquiries with the participating parties defining which metadata field are of interest. For example, signature, creation data and licensing status could be sent. The integration of the programming interface functionality into the base system is not tied to a specific implementation paradigm, but instead utilizes a flexible form of integrating this functionality. The instant invention embodiment is designed to ensure that the fundamental functions (upload - licensing - authentication) are available via defined interfaces, so that third party applications can automatically access these functions.

A central issue when integrating the functionality is security. Only legitimate clients should have access to certain actions (e.g., upload, license issuance, etc.). The instant embodiment integrates a number of mechanisms **5000,** as is generally illustrated in Figure 50, beginning with an API-key **5010.** In this step, the external participating party receives a private, confidential key, that is transferred in an HTTP-header with every inquiry. This key will be utilized to identify the external participating party and, as a next step, grant the associated access rights. A mechanism that will be utilized will preferably be based on OAuth2, which provides providing a token-based authentication procedure **5020.** According to this authentication procedure, the participating party, the client initially receives an access token (with a client ID and a client secret), and subsequently signs API-calls. Another mechanism that might be utilized includes JSON Web Tokens (JWT) **5030,** which is a special token that is signed by a server and contains relevant information about roles and period of validity. All of these mechanisms utilize the HTTPS (TLS/SSL) protocol for data transfer to ensure that the data transfer is protected.

The use of such an interface is also intended to ensure that a great many of digital queries can be processed. Participating parties like large media companies or social media platforms can potentially generate a huge number of queries. One way to ensure that these queries are processed in a timely manner is to employ rate-limiting methods, e.g., the generation and processing of keys and the associated activities are limited to some number, e.g., 100, uploads per minute. Additionally, a DDoS protection may be centrally integrated, wherein the server blocks IP addresses or tokens that generate unusual spikes in request queries. Such rate limiting prevents an aggressive or compromised client from overloading the system, while at the same time ensuring resources remain available to legitimate users.

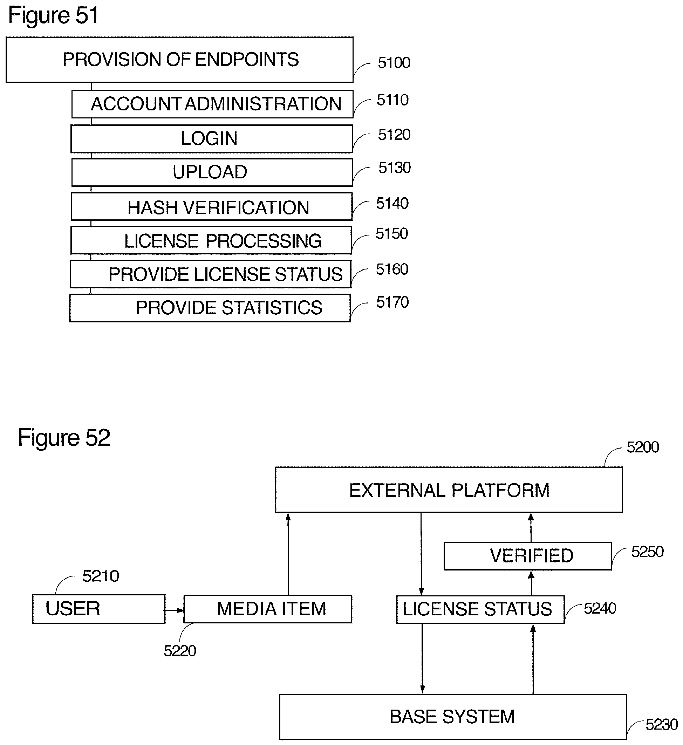

Supplying and integrating the programming interface into the base system of the instant invention provides a number of specific typical endpoints **5100,** some of which are disclosed in connection with Figure 51. In this figure endpoints are program functions that receive application programming interface (API) calls, also known as API requests, for resources on its server. A potential preferable scheme that might be implemented as guideline might contain the following exemplary endpoints:
- POST /auth/register **5110**
   This endpoint is designed to perform account administration functions, i.e., it will register new accounts and, optionally, it also could initiate an identity verification routine (e.g., requiring the user to an upload of identity cards or use video-ident).
- POST /auth/login **5120**
   This particular endpoint receives the data associated with users, which might be a combination of username and password, or tokens, wherein this endpoint returns session tokens or API-tokens.
- POST /media/upload **5130**
   This endpoint accepts data-bytes or a link to a data file, calculates the hash value and initiates and implements the digital signature (utilizing the deposited crypto-ID). This endpoint then returns a media-ID or hash-ID, with these IDs uniquely referencing the content.
- GET /media/(hash)/verify **5140**
   The verification endpoint is intended to verify if a submitted digital media item has a hash value that matches an previously submitted and registered item's hash value. As part of this function, , particularly verifying the time stamp of the registration and it furthermore verifies who has registered the digital media item. This endpoint returns potentially meta data like title, time stamp and publication status.
- POST /license/request **5150**
   This endpoint is designed to process license requests from third-party participants. The information that is provided is the hash value of the digital item, intended utilization purpose and requested time frame of use. The endpoint will forward the requests to the rights owner, with the processing of the response (approval/refusal) being asynchronously processed.
- GET /license/status?hash=xyz **5160**
   This endpoint preferably returns the information associated with a particular hash value stored in the system, including validity duration and authorization.
- GET /report/usage **5170**
   This endpoint is designed to return aggregated statistics associated with either user or digital media items, for example the information about number of uploads, number of approved licenses, expired licenses, etc., might be returned.
All these particular endpoints have to be designed functional and extendable with the goal being to represent different workflow scenarios.

In a typical approach the integration of the programming interface by the instant invention will be implemented by utilizing JSON, which stands for JavaScript Object Notation which is a lightweight data-interchange format that is easy for humans to read and write and easy for machines to parse and generate. It is widely used for transmitting data between a server and web application. JSON is could be utilized as the format for data exchange because it is lightweight and widely distributed. An exemplary API call might look something like the following:

```
 POST /license/request
       {
        "contentHash": "abc123xyz...",
        "requestedBy": "AGENTUR_456",
        "usageType": "PrintMagazine",
        "durationDays": 30
      }
      Reply:
       {
        "licenseId": "XYZ-789",
        "status": "PENDING",
        "message": "Request forwarded to content owner."
       }
```

When utilizing API-keys or OAuth2 the necessary tokens will preferably be transmitted with HTTP headers. For example:
Authorization: Bearer <access_token>
Additionally, the integrated system will validate each submission and will return appropriate error messages (e.g., HTTP 401 Unauthorized, 403 Forbidden) if a submission is invalid (e.g., expired token, improper format). Additionally, not every endpoint will need to be available for every party. For example, a platform implementing the instant invention will only be allowed to administer its own uploads, not the uploads of another user. To ensure that this approach is implemented accordingly an embodiment will utilize access control lists (ACL) or a role-based access control that is correlating with the crypto-IDs and the associated user group(s).

One option that will be available social networks or video platforms 5200 is the ability to automatically conduct an authenticity verification. This option is illustrated in connection with Figure 52, wherein after the user **5210** uploads a digital media file **5220** (e.g., a video) the participating platform initiates the hash verification endpoint **5140** before allowing the video to go live in order to determine if the video in question has already been signed and, if so, who is the registered owner. If it the license status of a video needs to be determined, the license status retrieval endpoint **5240** is activated and the base system **5230** can determine if a valid license exists and, if the validation step returns a positive result, the platform (e.g. a social network) automatically attaches a label to the video indicating the verified status **5250.** If the video has not been verified, the platform can block the video or label it as not verified **5250.** This workflow functions as a simple but effective method of identifying fake uploads or uploads that violate the owner's rights.

One benefit of utilizing the programming interface is that the administration of ownership rights and associated contracts can be automated, thereby saving time and cost. This advantage is of particular importance to participating parties working in journalistic areas, who may be responsible for administrating thousands of digital photos and other media types. The programming interface can automate the review of digital photos by utilizing a content management system that provides batch uploads to specific endpoints /media / upload. The programming interface then receives from that endpoint hash values and signature confirmations. The content management system will access the license status endpoint before the intended use of a digital media work is transmitted to the system and the approval is initiated to determine if the intended use is on par with the entered context in the contract associated with the digital media work. Additionally, the content management system determines the validity of the license in terms of duration and transmits information in the form of a warning in which case the inquiring party will be required to seek a new license or an extension of an existing license.

The programming interface also could potentially be configured so that parties utilizing mobile devices will be able to access the platform directly using customized software applications running on that sort of device. In some embodiments, users will be able to submit digital media works resident on their phone with a generated signature from within their device. One preferred workflow will begin with a user obtaining a digital work (e.g., a photo) that has been generated within the software application. Upon receipt of the user's request, the digital photo will automatically be uploaded to the platform, wherein the programming interface will calculate the hash value and sign the digital photo. However, in some alternative embodiments if the phone application possesses the private key, the software might calculate the hash value and signing of the digital media on the phone. The user utilizing the software application will be able to specify if the digital photo has to be kept private or is visible in the media catalogue resident on the platform. Additionally, utilizing the increased and simplified connectivity provided by the instant embodiment on mobile devices will also notify the user upon receipt of any sort of reply or information (e.g. license requests) as push notifications. This approach makes possible real-time workflows and that feature makes this embodiment more attractive for a young creator, who might be interested in less bureaucracy.

The integration of the programming interface is also specifically directed to provide different scopes of access privileges and rights. For example, the access privileges and rights might be associated with a participating party depending on the purpose and according to the principle of minimal rights. Therefore, the available and assigned scope might be selected from media.read, which allows participants to only access and read publicly available meta data. Another scope might be media.write, that allows participants to initiate uploads and introduce changes. The scope license.read allows participants to inquire as to the status of existing licenses. Finally, license.write allows participants to create or modify licenses.

Of course, the integration of a programming interface and communication primarily via interface queries and defined scope potentially opens the system up to malicious activities. That being said, the integration will be designed to implement protection against data manipulation which would, for example, prevent a potential attacker from upload digital media that contains malicious code. A number of different measures will be provided, starting with a MIME-Type-check, wherein the server of the platform verifies if the file extension and the header signature byte pattern match. Another measure might be a virus scan which will search for and detect malware. Another protection and security measure might be the introduction of a file size limit, with the goal being to prevent an overload of the system by limiting the size of the uploaded digital media files to a specific maximum size.

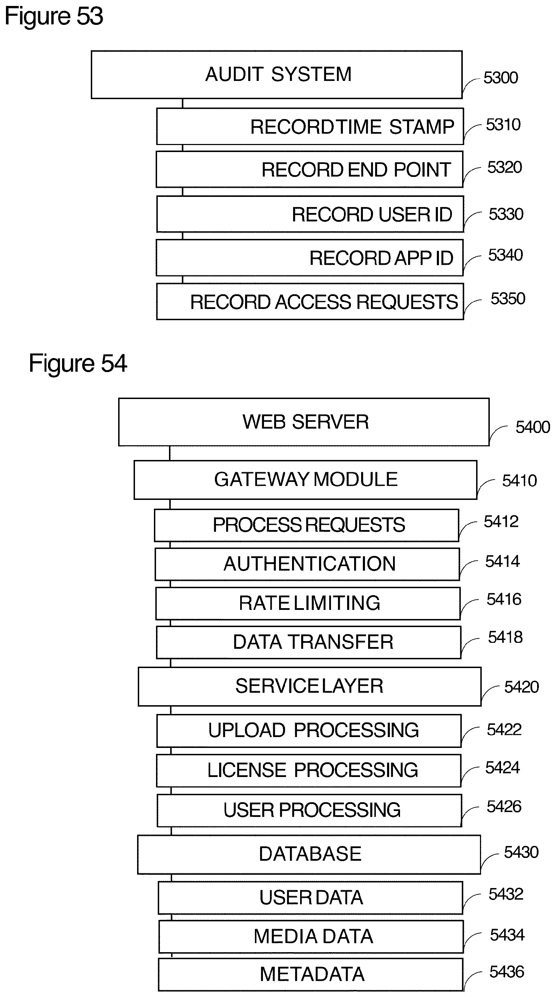

It is important that participating parties have easy and comprehensive access to the digital media files within the platform and that a reliable audit system needs to be in place. Certain aspects of this functionality are disclosed in connection with Figure 53. In this embodiment the audit system **5300** records every action initiated within the integration of the programming interface. The audit system therefore records the time stamp **5310,** the accessed end point **5320,** the user **5330** or app-ID **5340,** and access or failure of specific access requests **5350.** With such an audit system, it is possible to backtrack access requests and in case of the detection of malicious activities the concerned account will preferable be disabled.

To make the integration of the programming interface even more approachable, as disclosed in Figure 54, a reference architecture will be disclosed herein and should at least consist of the following components. One important feature is a web server **5400** with an accessible API gateway **5410** that is in communication with a gateway software module that receives and processes all requests **5412** and handles authentication **5414,** rate-limiting **5416** and transfer of data to the internal services **5418.** As noted in Figure 53, this embodiment provides a service layer **5420,** that consists of a media service which handles uploads **5422,** the hashing and the signature process. Another component of this embodiment is the license service functionality **5424** that manages license queries and approvals. A third service is the user service **5426** that manages account administration and role allocation. Another essential part of the architecture would be the database **5430.** The database stores user data **5432,** uploaded media data **5434** and associated metadata **5436** including licenses and logfiles. Not essential, but helpful for potential external software developers, would be to have a part of the architecture containing API-documentation. Such a reference architecture might be connected to the previously disclosed blockchain extension of the functionality of the crypto-ID. In that case, the final status of the complete system or the data associated with each media item will be stored on-chain and the programming interface would be the link between external software applications and the disclosed on-chain functions. Note that for purposes of the instant disclosure, when the term "phone", "iphone", etc. are used that language should be broadly construed to include any sort of mobile computing device including tablet PCs, smart watches, etc.

With the integration of a programming interface into the previously disclosed platform utilizing a crypto-ID, the instant embodiment will move in the direction of providing a truly open platform. Potentially further extensions might include webhook mechanisms, wherein the system will proactively send a notice to registered webhooks as soon as there are modifications or changes to a particular media item or the data associated with it, e.g., a license will be approved. Also, the integration could benefit from utilizing client libraries, wherein official SDKs in Python, Javascript and/or Java would simplify the integration with third party software. Additionally, the integration could be connected to configurable accounting models wherein large participating parties could be required to pay a transaction fee or monthly rates for utilizing the programming interface functionality. These potential extensions to the integration of the programming interface strengthen the functionality of the system as a central hub for copy right and authenticity data.

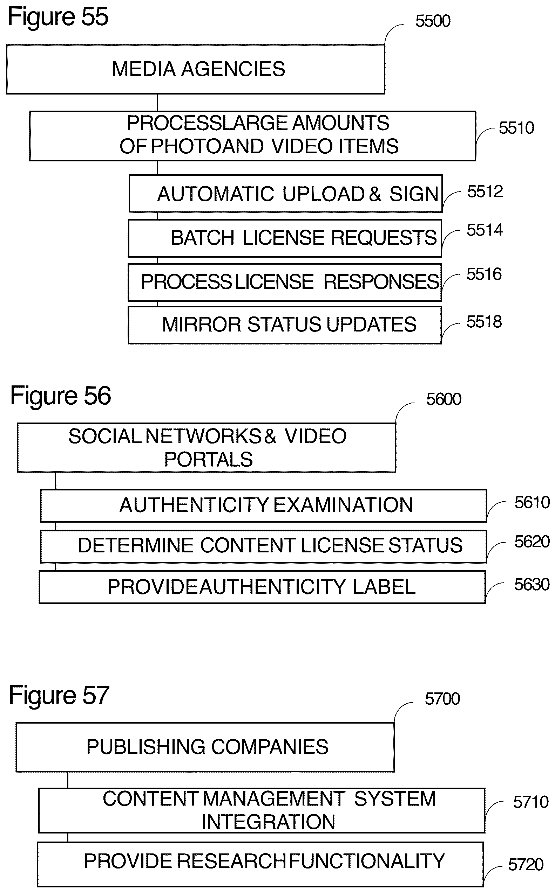

Having defined the technical architecture and the typical endpoints of the API-functionality, some advantages of utilizing this approach for different user and provider groups and how these advantages manifest in a practical implementation will next be discussed. For example, illustrated in Figure 55 is a high-level view of some of the functions of value to Media agencies working for advertisers who often need to process large numbers of photo and video material **5510.** The services provided by such users might screening, licensing and publishing the content they receive. With the disclosed API approach these user groups will be able to (a) automatically upload and sign multiple different instances of content **5512,** preferably without a manual login to a available web-interface. Additionally, this approach provides the opportunity to (b) send license requests in batch form **5514** to different content creators and to automatically process the associated responses via the API **5516.** Further, it provides media agencies the option of (c) mirroring particular status updates **5518** in internal data system, thereby allowing the users to be continuously informed about the status. This removes a time-consuming part of the administrative function and the media agencies will be able to react much faster to requests from end users.

Turning next to Figure 56, this figure provides a high-level illustration of the instant invention when used in connection with social networks and video portals **5600.** For these sorts of users it is essential that the uploaded content be legitimate in terms of its copyright and that the content is not infringing on or breaking a license terms of use. The provision of API functionality discussed herein allows this user group to (1) reliably examine a digital for for authenticity **5610.** That is, if desired every individual upload request can be automatically checked by the API-system using, for example, the command GET/media/{hash}/verify. This will allow the platform to determine if an entry exists in the database and who the content creator is. Additionally, for commercial content (2) the participating users can determine if the appropriate licensing rights exist **5620.** This step could be initiated using the command GET/license/status. Even further, this user category can (3) optionally provide an automatic label **5630** associated with the digital media item that might say "verified with the BLV-EVO system", if that is the name of an embodiment. If verification is not available the embodiment could respond with a warning notice. The combination of these points will help prevent the mass posting of unexamined or fake content in the online environment. In addition, these procedures could help raise the level of trust in the audience since the audience (e.g., social media users) will be informed that the platform is using a service that keeps it from being a reservoir for plagiarism and fakes generated by artificial intelligence.

The publishing companies, newspapers and editorial offices **5700** group of users in either a print or online environment, as generally illustrated in connection with Figure 57, will appreciate the advantages associated with integrating licensing information directly into their content management systems **5710.** In this embodiment, if an article is being generated of finished, the addition of a digital photo or video will automatically activate a command such as GET /license/status?hash= command to determine whether the digital medium is approved for the use in a journalistic context. Additionally, the integration allows the possibility of using media items with temporally limited licenses, with the content management system generating automatic messages informing users about potential status changes in connection with the licenses. Additionally, the API functionality can provide a particular endpoint like GET /media/search?query that can be utilized by the editorial offices as a research system **5720,** wherein metadata can be retrieved, in order to determine content that might be utilized for an article. All these functions would provide an increase in speed of the editorial process and also an decrease in the legal risk associated with unknowingly using unlicensed content.

For the integration of a productive API environment, comprehensive administration and security functionality which the instant invention provides using configuration management of partner keys. In addition to the provision of basic API keys, the instant invention provides a more complex partner administration. This option integrates into the standard functionality of the crypto ID platform. As a first functionality, the account generation and administration of this embodiment will be adapted so that every external participating company is assigned a unique account. Different teams within the participating companies can be assigned sub-keys. To heighten the security, any provided API-keys will have an expiration date which might be determined by the administration entity. Utilizing API keys with an expiration date that have to be renewed will further help prevent abuse. Additionally, the platform administration management allows granular rights management, e.g., it will be possible to define reading rights or writing rights for each user in connection with the "media" and "license" entries. This and other variants are intended to minimize the risk, that a stolen API key might be used to provide unlimited access.

A further approach to providing administration and security functions to users includes the option to monitor the API traffic to detect anomalies. Typically, this monitoring functionality will be implemented using an API dashboard, wherein the provider of the platform can control and monitor in real time how many requests per participating user are entered into the system and be notified if a particularly high number of erroneous requests occur. In such a case, an alerting routing is will be integrated into the system so that om the event of sudden load peaks the system will automatically dispatch warning messages. As part of the monitoring process the system also provides functionality for traffic analysis, wherein log files will be evaluated to determine if digital attacks on the system have occurred (e.g., brute-force or DOS attacks). All of these approaches are intended to contribute to stability and damage prevention.

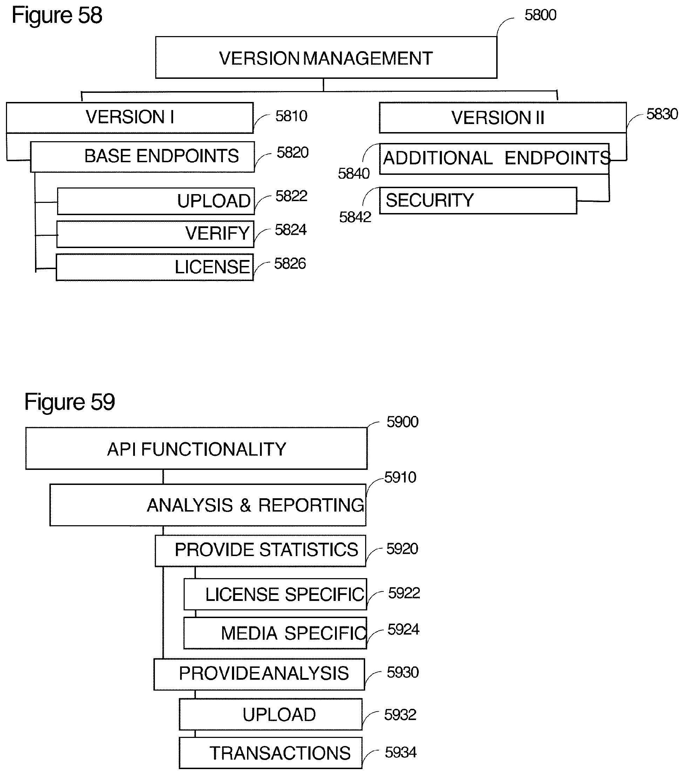

An additional important component of the administration and security functions, as illustrated in connection with Figure 58, is a version management 5800 functionality associated with the API. This is integrated to keep the connection to external parties' future proof. Preferably at least two version layers will be made available. Version 1 **5810** preferably provides the base endpoints **5820:** upload **5822,** verify **5824** and license **5826.** The functionality of these endpoints has been discussed previously. Version 2 **5830** will preferably provide additional fields **5840** and end points, for example new security measures **5842** that will be integrated into the functionality in the future. Applications that provide access for clients are intended to continue using the version 1 endpoints, wherein new features are only provided in version 2. The versioning approach, with different version paths, is intentionally directed to be uncoupled, thereby preventing updates to the core system from breaking existing API functionality.

The integration of the API functionality **5900,** as disclosed in connection with Figure 59, also includes an extensive analysis and reporting function **5910.** This function can take different forms, e.g., participating users might be able to request statistics **5920** associated with the licenses **5922** such as the number of active, expiring and expired licenses for a specified timeframe. Also, statistics associated with media items might be accessed, for example how often a specific media items **5924** has been licensed, by which partner and in what region. In addition, analysis functions **5930** will optionally be provided, for example graphs that provide information about upload trends **5932** or licensing transactions **5934** for each day, or each week might be produced. This represents a considerable additionally information for professional users such as agencies or publishing companies because this sort of information provides better control, evaluation and estimation of utilization, coverage and compliance with copyright provisions.

Another important aspect of providing an API that is utilized in a worldwide context is the protection of privacy, wherein the access to personal data like name, email address should only be limited. The instant invention provides a number of measures to make sure that these requirements are met. One approach might be the compliance with local law, for example the General Data Protection Regulation in Europe, which requires that personal data is only accessible in special circumstances. Additionally, the approach might be implemented with pseudonymization so that external users are only provided an id of a user, not the users real name. Another measure to protect personal and other data, might be limit to the scope of the access so that a participating partner can only view the data associated with licenses of his or her own media items and not the global datasets of other users.

The disclosed extensions of the base system with the API functionality will preferably be tightly coupled with the other disclosed components of the instant invention. That is, the API system basically utilizes the same core data model as foundation as that used the base system which is made up by user data, media items and associated data and licenses plus associated data. In connection with the disclosed blockchain functionality the API system can offer calls that, in addition to the local database entry, can initiate an on-chain transaction (e.g. "registerContentonChain"). In that context an endpoint like GET /blockchain/txstatus?hash= will preferably provide the current status of the on-chain registration. The instant invention benefits from the above-mentioned modularity which ensures the further development. Users can combine the base system with the API functionality if needed and additionally have the opportunity to benefit from the blockchain functionality by integrating the corresponding endpoints.

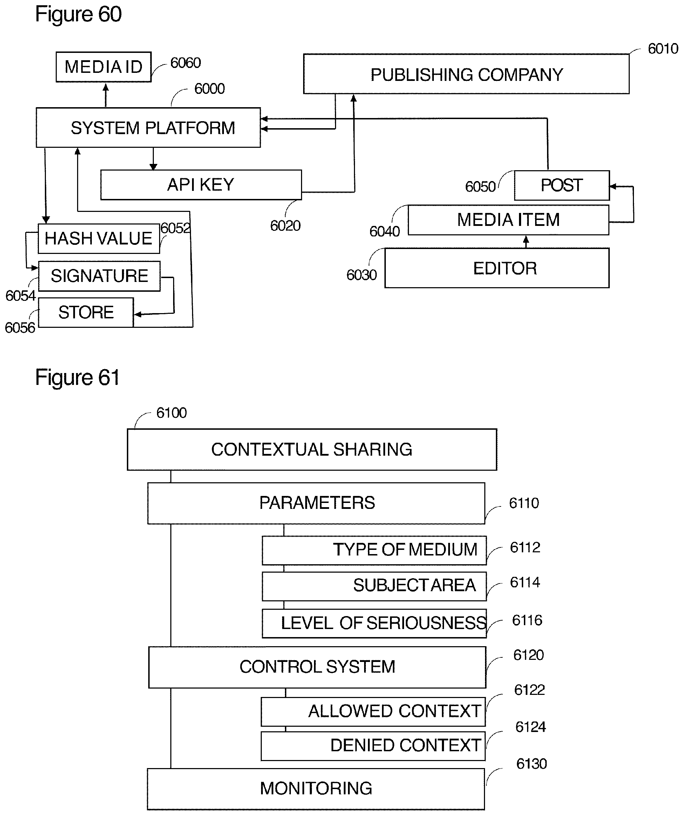

To further illustrate the API functionality of the instant invention, a practical example, as illustrated in connection with Figure 60 is disclosed. For users of the system such as a publishing company **6010** that receives many hundreds of digital photos and videos for articles, the system **6000** might enable the publishing company to access the API functionality by providing an API key **6020** that will be deposited in the content management system. In case that an editor **6030** provides a new media item **6040** to the content management system the system will automatically initiate a POST /media/upload command **6050,** wherein the system will calculate the hash value **6052,** generate the signature **6054,** that is based on the provided crypto-ID of the editor or the publishing company and store the media item **6056** in the database. The system then returns a media ID **6060.** As has been disclosed, this approach will allow users to benefit from an obligatory license disclosure, where in case that the content management system will finalize an article, it will, prior to publishing the article, initiate a GET /license/status?hash=XYZ to make sure that the necessary rights are available. In case that the licensing rights are not available or incorrect, the system will automatically initiate a POST /license/request. Even further, the publishing company will benefit from a constant monitoring approach, wherein, as an example, every 24 hours the system utilized by the publishing company could initiate a GET /report/usage command to initiate the generation of a list showing what licensing contracts are about to run out. The data associated with this list will be utilized to automatically remove content from articles or renew licenses if necessary. With such a smooth and secure workflow, the instant invention provides the editorial staff an option to forego the tedious checking process or manual copying of content items.

The integration of the API functionality is a comprehensive, secure and scalable programming interface that can provide a seamlessly integrated system that multiple external participants can use and that goes beyond the provision of a simple web-based user interface. This API functionality integrates into an eco-system associated with the base system, providing the possibility of quickly initiating and processing requests associated with media items. This functionality can potentially open the door to a system for a broad use in international and high-volume markets that generate, process and license media content at every second.

Since the blockchain integration and the application programming interface functionality both might be added to the base system, the question arises regarding how context related sharing, using or blocking of digital media content might be implemented and added to the base system. Therefore, the applicant proposes a further enhancement in modular form that might be added to the base system. A core goal of this enhancement is to provide precise control, in what environment, for which purpose and in what context an already signed digital media item (photo, video, audio) might be utilized. The already disclosed base system plus enhancements provide solutions for fundamental management of licenses and access rights of digital media items, but do not address in what context the digital media items might be released. For example, one person might desire to have personal photos (portrait, event photographs) only to be released in legitimate news articles and forbids the use of personal photos in boulevard media or satirical formats. As another example a musician might allow the use of his or her music only for documentations, but not for political canvassing or as a sound track for advertising.

Such licensing restrictions might be more than simple temporal or geographical limits and could include of contextual or thematic specifications. These restrictions, as disclosed in connection with Figure 61, are addressed by the contextual sharing extension **6100** by (a) defining contextual parameters **6110,** like type of digital medium **6112,** subject area **6114** or level of seriousness **6116;** (b) supplying control-systems **6120** that define what context is permitted **6122** or denied **6124;** and, (c) arranging for a monitoring mechanism **6130** so that violations can be detected and potentially be fined and/or the license terminated. This embodiment requires that such a system will be to determine and assign contextual properties includings, for example the category or the genre of the intended use.

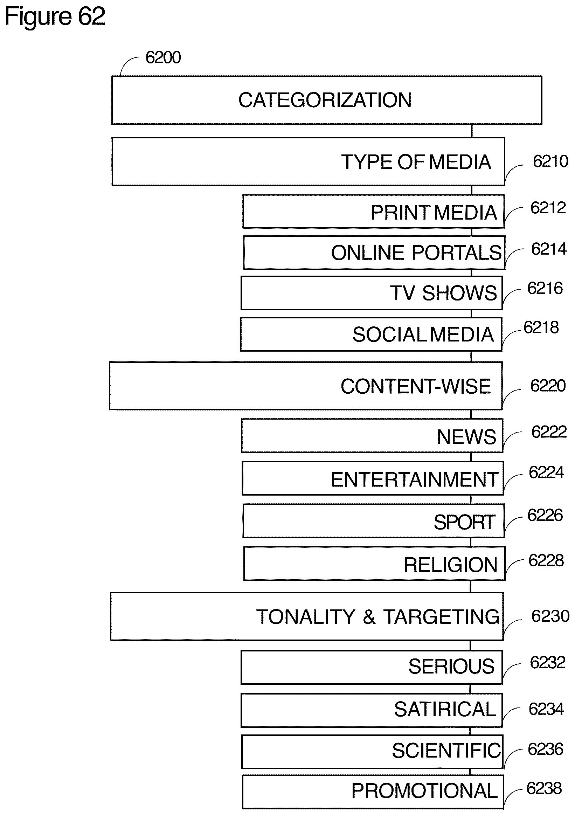

As has been disclosed in Figure 62, an important building block is the systematic categorization of the contextual utilization **6200,** wherein the instant invention discloses a particular system of rules, which contains potential categories. Categories that might be defined might include (a) kind of media **6210,** wherein this category comprises for example print media **6212,** online-portals **6214,** tv shows **6216,** social media **6218** and commercials. Another category (b) might be content-wise direction **6220.** This category might include subjects such as news reporting **6222,** entertainment **6224,** sports **6226,** religion **6228** and art. Another category (c) might target a particular consumer group and/or tonality **6230,** which might include serious **6232,** satirical **6324,** promotional **6236** or scientific **6238.** These categories are only meant to be examples of the sorts of licensing categories that might be used, with the granularity potentially depending on the industrial sector or user group. The proposed enhancement stores the defined categories in an accessible and utilized database, wherein in case of a licensing request it is possible to clearly define the category that might be utilized by the digital media item.

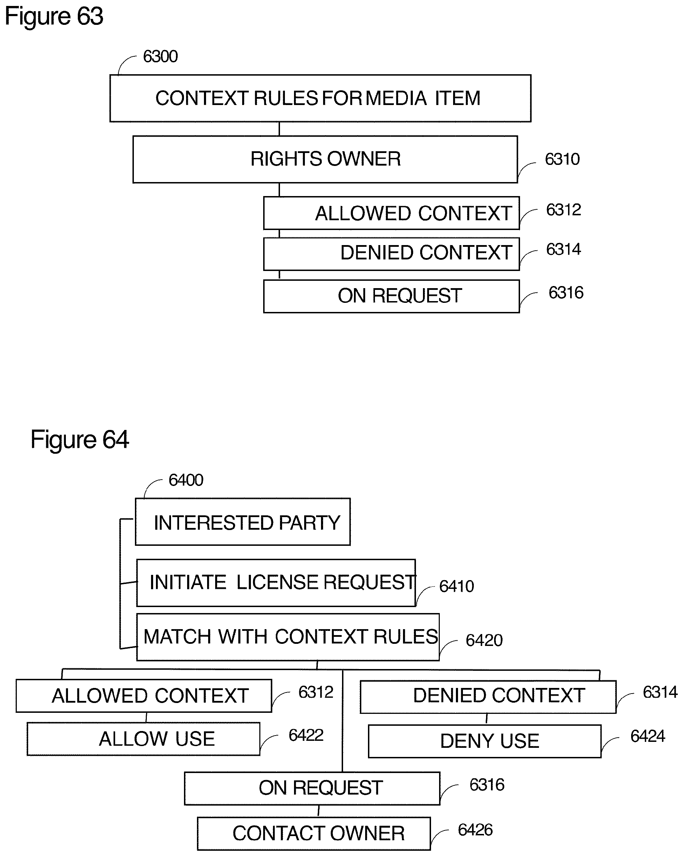

The context-related system above is intended to be viewed as a context-release system, where context dependent rules, as disclosed in connection with Figure 63, are provided that are primarily intended to automatically regulate the access to individual digital media items. These rules **6300** are preferably selected and defined by the rights owner **6310** and are stored in the associated data for this user or are alternatively selected by the owner individually at every upload of the media item. Therefore, the user might be able to specify which contexts are allowed **6312** and which are denied **6314.** In this case the definition might comprise a list of allowed contexts, for example news, boulevard or documentations, or a similar list of prohibited contexts, for example no utilization in political advertising. In some licenses the rights owner might want to individually approve or deny license requests **6316.** That might be the case where, for example, the proposed use is in connection with commercials or public relation campaigns. The instant embodiment will store the so defined user-specific rule set, either as a global / multi-item definition or defined for a single associated media item. In case of a licensing request the instant invention can therefore very quickly determine if the request is allowable.

Thus, if a participating party submits a license request the request will be matched with the contextual data defining the allowed use case stored associated with the media item in question. Preferably, the workflow starts with the user selecting the desired context from the available context categories for the desired media item. Those choices will then be sent to an embodiment of the inventive system. The system in a next preferred step will match the communicated category with the associated rule set defined by the rights owner and if the context use category is part of the "denied" or "on request" categories, the system will automatically deny the request or will contact the rights owner requesting a manual confirmation. Either way, the rights owner will receive a notice containing all information and decide if the request is approved or denied. In case of an allowed use case the media item will be automatically be provided to the interested party for use.

One option preferably available in connection with the media item context release settings is that the rights owner is able to change and adapt the defined use at will. So, for example the rights owner might be given the option of changing the allowed use for a category "commercial" media item from "allowed" to "denied". In either case, all licenses that have been stored in the system associated with that media item will be marked automatically as "revoked" or "conflicting" and participating parties that utilize the media item in a commercial context will be notified and receive a warning or a request to stop using the media item in that context. By providing a high amount of granularity the instant invention is very flexible, however that is based on a high amount of automation.

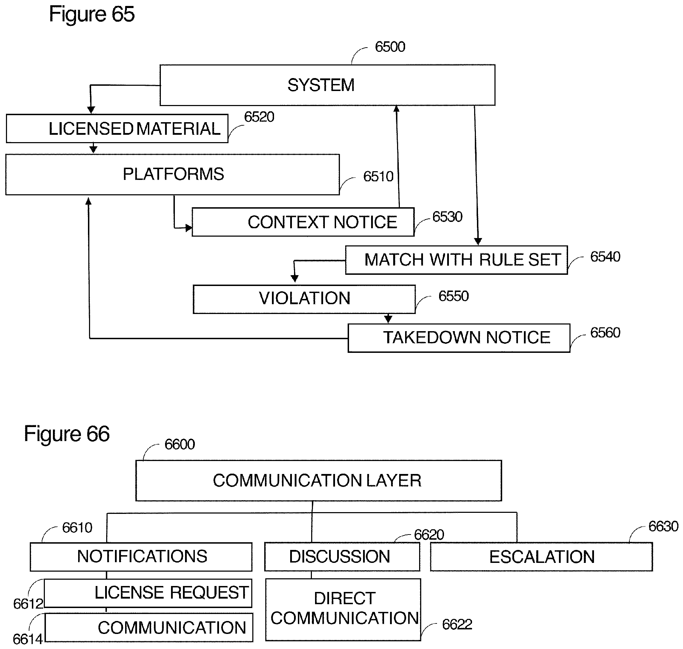

A further functionality of the instant embodiment is an automatic control mechanism, as disclosed in connection with Figure 65. This variation is intended to detect violations of the defined contextual rules by utilizing the functionality of the publication platform **6510.** The licensed media items **6520** will have information associated with it regarding the publication of any media items along with the associated information about the licensed category **6530.** The publication platform **6510** will provide notice of publication of the licensed material **6520** and the context in which it was published to the instant embodiment **6500.** to the platform of the instant invention 6500 and the instant invention will then determine if the publication is approved and, if not **6540,** the system will register a violation **6550** and automatically send a takedown notice **6560** to the publication platform and the party licensing the media item. Additionally, the rights owner will be informed and is able to initiate legal or internal measures to deal with the violation. This approach minimizes the risk of utilization of a media item in unwanted and unauthorized context.

For the implementation of the contextual licensing approach of an embodiment a communication layer **6600,** as illustrated in connection with Figure 66, is disclosed. One function of the communication layer **6600** is to simplify the contact between rights owner and parties interested in licensing media items. This layer includes a number of different sections as generally indicated in this figure. One section is preferably designed to initiate notifications **6610** that the license requests **6612** for specific context have been received and to send the rights owner a real-time notification **6614.** The notification might be transmitted in many different ways but it would commonly be sent via email or a text message. The communication layer may also provide a chat- or discussion channel **6620** between the rights owner and the requesting party. This would facilitate direct communication **6622** between these participating parties, thereby making it possible for the rights owner to pose queries regarding a media item directly to the requesting party before releasing the desired use or denying it. Additionally, the communication layer also preferably includes an automatic escalation processing **6630** so that, in case fixed rules are violated, the system will either block the further utilization of the media item or send a cease or take-down notice to the licensing party, all of this happening without manual intervention by the rights owner. This elevates the instant invention of contextual sharing above a simple YES/NO licensing model.

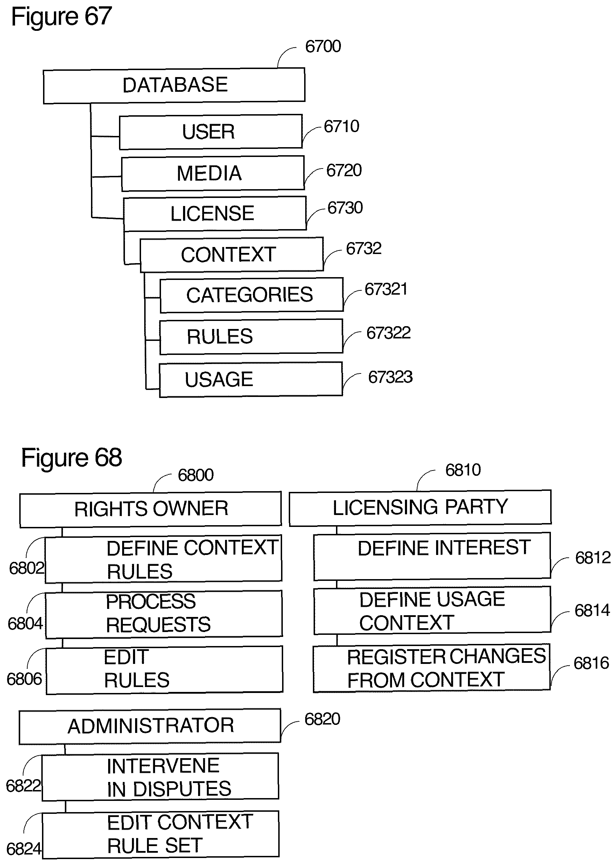

Turning next to Figure 67, the contextual licensing addition to the instant invention is preferably implemented by amending the already disclosed database structure **6700** consisting of "user" **6710,** "media" **6720** and "license" **6730** with a particular table directed to "context" **6732,** wherein the potential context categories (e.g. "news", "commercial", "entertainment") are defined. Additionally, there may be context rules **67322** associated and stored with the media item, wherein a mapping function identifies the categories **67321** that are allowed, denied or associated with manual approval. Also, the context usage **67323** may be stored within the system where the request queries and the actual use data (medium id, context id, start date and end date) is stored. This way the system can monitor and report who is utilizing the media item and in which context.

The system of an embodiment might also employ an AI-based context analysis that is designed to detect the actual environment of use of a media item from the address of the release location. Additionally, this variation will utilize an AI-based categorization of the textual content of the license to determine the category of the content. This allows the instant invention to automatically and independently detect a violation if, for example, a media item is embedded and released in a context that does not correspond to the license usage rules. The use of AI for context detection and verification is potentially expandable but the main approach to categorization will be a manual definition of the actual context.

The contextual sharing enhancement will preferably be linked with the previously disclosed enhancements. For the connection with the API functionality, the API will provide endpoints for handling context-depending queries, e.g., POST /license/contextRequest, and GET /context/rules?medialD=. These types if commands will allow external platforms to access the context rules that are assigned to this the media item. A connection to the blockchain integration might be established wherein the context-based media item release might be recorded as smart contract conditions. If the requirements of the item's context utilization are not followed (e.g. wrong category), the contract automatically denies the release of the media item for the desired context.

As another example, an influencer who is promoting content with multimedia (e.g., photos or videos) is concerned with maintaining his or her image as represented through social media platforms and is specifically interested in limiting the use of the influencer's media creations in unsuitable commercial campaigns. Therefore, the influencer can utilize the system to specify the media items that are allowed in "commercial" context always require manual approval. Additionally, the user might completely block the use of the generated media (photo, video) in the categories "political advertisements" or "adult entertainment", etc. If a media company or agency desires to license a digital photo, the company is requested to add the use context with the request, for example the request might be to utilize a photo commercially for a product in the fitness sector. The content owner will process the license request and will, if acceptable, allow the licensing request. The instant invention can therefore be utilized to protect the image of the content owner and also preserve the utilization of the media items regarding their appropriation.

Another potential category of users that might find context limiting useful, would be artists that capture and generating digital images from paintings. These users will be able to define the usage context for their images as being for use in serious art exhibitions. Uses such as exhibition in night clubs or explicit events will be prohibited. Additionally, no use will be allowed in politically polarizing contexts. If the organization of an exhibition desired to license a photo, the exhibition will need to be correctly categorized (e.g. art exhibition in a museum) in order to receive permission. Only in the "art exhibition" case will that case receive an automatic approval. If an art event were taking place in a bar or a club, a manual processing of the licensing request would be necessary or the request would automatically be denied. Another category of users that might find the instant invention useful would-be actors, who are concerned with upholding and managing their image and might seek to do that by specifying that video scenes containing that actor are not released out of context, or in satirical or fake contexts. The particular use case associated with that sort of user might begin with the acquisition of individual scenes by the production crew who are participating in the generation of content. The participating actor then defines the contextual use rules so as to deny the use of the video scenes in comedy sketches, spoof shows or political advertisements. If an interested third party would like to license scenes from a film the third party will be asked to define the utilization context associated with the licensing request. The instant invention will match the licensing request with the contextual use rules and, if the result matches, automatically allow or deny the request. Such a functionality protects the artist from unwanted memes, or spoofs, not approved content that is contrary to the desired image of the artist.

The addition of the contextual licensing approach, illustrated in connection with Figure 68, as has been disclosed, brings enhancements to a numerous functionalities disclosed previously, wherein also the participating parties and the roles that these parties occupy within the system are also enhanced with new functionalities to accommodate contextual licensing. The different roles that are utilized within the system comprise of the rights owner **6800,** the licensing party **6810** or interested party and the administrator **6820.** The rights owner will preferably be able define the context rules **6802** and will receive notices from the system about the requests **6804.** Additionally, the licensing or interested party is required **6812** to declare the usage context **6814** associated with the media item in question and the party is also required to indicate changes from the defined and disclosed context uses for each media item in question **6816.** The administrator user can specifically intervene in case of rising disputes **6822,** for example in case of manipulations. The configuration of the context-depending rules can be very detailed or potentially simplified. That is, the administrator could manage, edit or define predefined rulesets **6824** that the rights owner would only need to select and activate or deselect.

The rule management also allows the rights owner to change or edit the previously determined context rules **6806** at any time, for example blocking previously allowed categories. The system of contextual licensing handles such changes, wherein existing and stored licenses are examined in terms of the compatibility with the rule changes. This determination is preferably handled automatically and in case that a conflict arises the rights owner will either allow an exception to the license or will revoke the license. Either way all participating and affected parties will be notified automatically via a robust communication system and potentially providing an accommodating solution for participants who are depending on the already pronounced notifications.

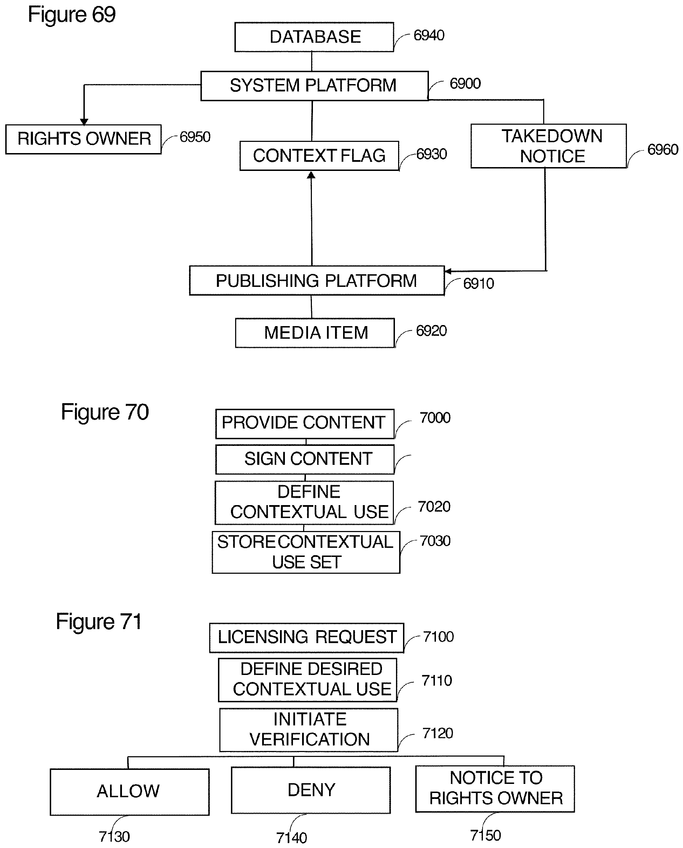

Turning next to Figure 69, the instant embodiment will provide technical solutions associated with the basic functionality that will assist transparency and protection of the content and the generated licenses for all participating parties. Raising transparency could be established by the system **6900** by requiring the publishing platform **6910** to transmit a context flag **6930** to the base system every time a media item **6920** is published or accessed. This transmission might take the form, for example, of "context=DOCUMENTARY" if the usage was of that type. The transmission will be stored within the database **6940** associated with that media item and either automatically matched with the stored licensing details or presented to content owner **6950** for review. If the automatic match shows that the transmitted flags differ from the license permissions, the instant invention will inform the rights and content owner and allow them to take further action.

Additionally, to increase the transparency and protect the content from a violation of the use limitations an embodiment offers the option of integrating, establishing and initiating direct takedowns. This is preferably implemented by requesting that the platform publishing **6910** notify the instant system **6900** (e.g., either daily or in real time) each time a new media item is received and he context **6930** in which the media item **6920** will be published. The base system will match the information from the publishing platform with the stored license information **6940** associated with that media item and, if the media item's proposed usage context is different from the approved licensing context, the base system will automatically send a command or notice **6960** (e.g., via http or api instructions) to the publishing platform to remove the media item from that platform. If the repeated violations of the license are noted for either a single media item or the licensing party are noted, the rights owner might be able to initiate legal steps to deal with the ongoing violations. This synergy between the instant system and the publishing platform will allow allows the rights owner to automatically and quickly detect violations and to respond accordingly.

Coming next to Figure 70, this figure illustrates some additional details of one possible embodiment of the context specification process. The process starts with an upload of content to the system **7000,** with the rights owner being the entity that provides the content. The rights owner might be, by way of example, a photographer, a music producer, a person generating digital content, etc. As a next preferred step, the uploaded digital item will be signed **7010** by the system as disclosed in connection with the base system. Preferably at the same time, or at a later time the content owner will initiate the contextual use configuration **7020,** with the configuration options preferably taking one of the following forms (a) allowed context categories, (b) automatically denied context categories and (c) special clearance context categories, wherein (a) and (b) are automatically handled by the system. Option (c) will require a manual selection of context categories by the content owner. The instant invention will then store the contextual use configuration associated with the uploaded media item in the database of the instant invention **7030,** so it can be read in response to a pending license request. Completion of this process means that a context ruleset has been defined and stored that defines how, where and where not the media item might be licensed and utilized.

Turning next to Figure 71, an interested party that utilizes the system might transmit a licensing request **7100** either directly through a web interface or utilizes an API, as was disclosed previously. The interested party will be provided with a query that preferably allows them to communicate the context in which context the desired media item is going to be utilized **7110.** In a next preferred step, the instant invention will initiate an automatic verification step **7120,** wherein the system will match the defined desired context category with the contextual use configuration and, if the category is in the allowed section **7130,** the instant invention will automatically issue the desired license. If the category is blocked or in the denied section **7140,** the instant invention will automatically deny the licensing request. And, if the requested category falls into section (c) of the contextual configuration, the rights owner will be sent a notice that contains the necessary information and requests a decision from the owner **7150.** This approach eliminates the extensive manual processing of licensing requests in standard cases, leaving exceptions for examination by the rights owner.

As has been disclosed, an embodiment also provides a sophisticated monitoring functionality that is not only directed to providing licenses, but also continuously tracks the utilization of the digital media item. The tracking functionality is made available by providing interfaces that entities that publish the media item can use to vet media items before publication by notifying the base system about the context in which the media item will be utilized and published. The system will receive and match the parameters of the request with the stored context configuration for that particular media item. If it detects that the proposed usage context is different from the category for which the license has been granted, the system will set a flag and report the violation to the content owner, who can either revoke the license and/or send a notification to the publishing entity requesting an examination of the contextual classification within the publishing entity. This functionality protects the content owner from a falsified licensing of the media item by automatically detecting discrepancies between the licensed and the actual contextual use.

Associated with the above disclosed functionalities and fundamental for a successful implementation of certain embodiments is the provision of reliable communication paths between all participating parties, e.g., between rights owner, licensing party and the platform itself. The instant invention therefore will preferably provide push messaging functionality, wherein the rights owner is provided with a push message in case of incoming requests for problematic context categories. Additionally, associated with the previously disclosed contextual tracking functionality the system evaluates if the approved licenses are being honored and also monitors potential changes from the rights owner regarding the contextual ruleset. If such changes are made, the system will automatically send communications to all licensing parties informing them about the change of use conditions. In addition to the push notification and the system alert communication, an embodiment will also provide a dialogue-oriented process, that might be optionally used where the licensing process could either be implemented in real-time or time-delayed. This would differentiate this request from the automatic processing case so that the rights owner would have the opportunity to make inquiries to establish more accurately the intended contextual use. At the conclusion of the interaction with the rights owner, the licensing request is will be approved (or not) and the license granted (or not).

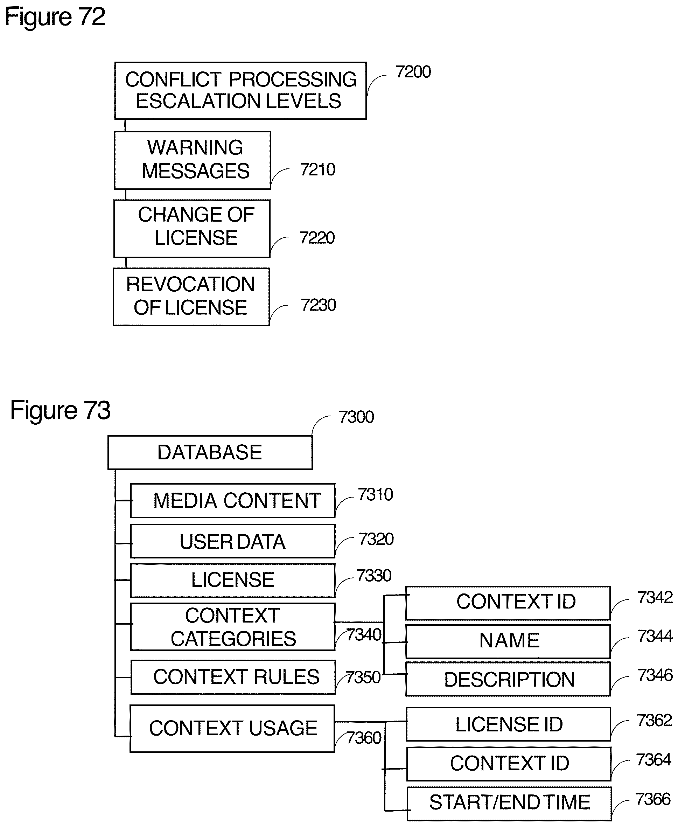

The instant embodiment further includes an optional automated processing of conflicts and the resolution of potential conflicts, as disclosed in connection with Figure 72. The processing will preferably be initiated if a participating party provides false information or if a party violates the agreed upon contextual requirements. Automated processing of conflicts **7200** begins with detection of a breach of a licensing agreement. This breach might be identified by either the rights owner of the instant system. In the case of the instant system, the breach might come to light via the AI-based random sample monitoring discussed previously. The processing mechanism is designed to utilize different levels of escalation. One level of escalation would involve the system automatically transmitting a warning message to the licensing party **7210** that a violation of the licensing agreement has been detected. Another level might be a partial withdrawal or partial change of the licensing agreement **7220,** wherein the use of the media item is withdrawn from a particular context category, with other categories remaining valid. Another level of the escalation might be the complete revocation of the license which would be appropriate in case of material breach of the license agreement. In this case the system would completely revoke the license **7230.** It should be noted that these levels might be initiated sequentially, e.g., the licensee might be first given the option to correct the problem. If that approach fails, the matter will be escalated further. All notices and actions associated with this embodiment will be recorded so that subsequent legal claims can be supported. The different levels of escalation and the comprehensive documentation that is created will make certain that contextual license rights are not just valid on paper, but provide the rights owner strong measures to actively enforce these rights.

The approach to contextual licensing disclosed in connection with Figure 73 also introduces additions to the database **7300** structure that is utilized by the base system. Additionally, to the basis entities (user **7320,** media **7310,** license **7330)** the contextual licensing parameters are preferably stored in the form of a table that contains definitions and catalogs associated with the context categories **7340,** wherein a context-ID **7342,** a name **7344** and a description **7346** are stored. Another table stores context rules **7350,** with the ID that identifies the media item being linked to context-ID and with one rule (e.g. allow, deny, manual). Additionally, a context usage table entry **7360** will be integrated into the previously disclosed table setup, wherein the context usage table records when and where a digital media item is actually being used (e.g. license-ID **7362,** context-ID **7364,** start time, end time **7366,** location (url)). With this addition the instant invention will be able to define and record what is allowed and additionally monitor what is happening in practice.

The previously disclosed workflow for licensing includes receiving the license request and processing the request. In this embodiment the approval or denial step will be augmented by the addition of a feature that will be referred as a contextual connection. The addition of contextual licensing can be merged with the already existing and previously disclosed rights management system with the fine-tuning opportunities regarding the contextual utilization. The adapted workflow preferably begins with a licensing request where the initial time and place of desired use is being examined, with the next step being the examination of the communicated context and, as a last step, following the approval of the request. If the license to the media item is requested in an uncertain category the rights owner will be contacted to manually process the request.

The above-described addition of a contextual licensing approach to the instant invention will provide a considerable additional benefit for different stakeholders. Individual users, like artist, influencers or private persons can maintain control over the public perception of their reputation and the image by making certain sure that their content (photos or videos) does not appear in defaming, inappropriate or politically sensitive contexts. Commercially active users, like agencies or publishing companies, benefit from clear context specifications and directions, because these participants will be able to know exactly which publishing contexts are allowed without having to get separate clearance for each planned use of a media item. This makes it possible for operators of media platforms to be able to minimize the risk of legal conflicts, because for every upload or playout of content the context category will have to be specified and in case of breaches the operators will receive early warnings. The approach of the instant invention will increase the level of trust in the whole ecosystem of digital media.

The contextual-sharing extension module complements the rights management section of the base system, because it provides the ability to define contextual finetuning. It goes beyond the classical constrains like time, place and person and allows the rights owner to define the context in which the media items are allowed to be published. In the current media landscape this is particularly of high importance, since AI-fake, disinformation campaigns and politically controversial contexts are on the rise and rights owner do not want that their image or voice to be published in questionable environments and contexts. This is especially true when the digital media material has previously been approved for what appeared to be harmless purposes. With the contextual rules, the monitoring and escalation handling in case of violations provides a way to keep the control over the public image and at the same time being provides legitimate users a smooth approval process.

The extension module of contextual sharing underlines and makes sure that intellectual property law in the modern media landscape is not only secured by global time and location definitions but also limitations based on the contexts in which the media content is allowed to be published and shown - or not. Therefore, the instant invention provides an opportunity for granular fine tuning of the use of media items in the media landscape, which in modern times is essential for protection of image, political neutrality and consistency regarding trademarks. The approach provides a dialogue-oriented process, where licenses are not only approved or denied, but also bound to contextual terms. It makes sure that inappropriate or fraudulent use is detected early and additionally quickly blocked.

The other parts of the instant system, i.e., the base system, the blockchain extension module and the programming interface module, together form a complete ecosystem which allows digital content to be used and shared securely, authenticated and used in a way that is true to defined contexts. The contextual sharing extension is an important extension of the modular concept, which is designed to face the challenges of licensing media in an environment that is becoming complex and which allows rights owners to license their digital media items consciously and responsibly.

The contextual sharing enhancement of the instant invention complements the rights management approach of the main system, by allowing contextual fine tuning. Going beyond the classical dimensions (time, location, person) the rights owner is able to specify the context in which the media items are allowed to be utilized and potentially published. In view of the current media landscape with AI-based fakes, misinformation campaigns and politically controversial topics such an enhancement is of high importance. Content creators and the rights owners typically do not want their content, their personal images or their voice being published in questionable environments and this is especially true the digital material was originally cleared for a usage that was harmless of put the owner in a favorable light. With the disclosed context rules, the monitoring and the escalation steps this functionality enhancement provides is part of a toolbox that will help content owners keep the control over their public image and simultaneously permit rightful users a smooth process of licensing request, processing and clearing.

### CONCLUSIONS

It should be noted and understood that the invention is described herein with a certain degree of particularity. Many modifications and extensions could be made to the instant invention by those of ordinary skill in the art. However, the invention is not limited to the embodiment(s) set for herein for purposes of exemplifications, but is limited only by the scope of the attached claims.

It is to be understood that the terms "including", "comprising", "consisting" and grammatical variants thereof do not preclude the addition of one or more components, features, steps, or integers or groups thereof and that the terms are to be construed as specifying components, features, steps or integers.

The singular shall include the plural and vice versa unless the context in which the term appears indicates otherwise.

If the specification or claims refer to "an additional" element, that does not preclude there being more than one of the additional elements.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

For purposes of the instant disclosure, the term "at least" followed by a number is used herein to denote the start of a range beginning with that number (which may be a ranger having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%. Terms of approximation (e.g., "about", "substantially", "approximately", etc.) should be interpreted according to their ordinary and customary meanings as used in the associated art unless indicated otherwise. Absent a specific definition and absent ordinary and customary usage in the associated art, such terms should be interpreted to be ± 10% of the base value.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26 -100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Still further, additional aspects of the instant invention may be found in one or more appendices attached hereto and/or filed herewith, the disclosures of which are incorporated herein by reference as if fully set out at this point.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of authenticating an unknown digital item, comprising the steps of:
(a) accessing a digital media item submitted by a user;
(b) calculating a hash value from said digital media item;
(c) receiving authentication of an identify of the user;
(d) generating a cryptographic key pair comprising a public key and a private key;
(e) using at least said private key and said hash value to generate a signature associated with said digital media item;
(f) providing at least said private key to the user;
(g) generating a blockchain token containing a plurality of indica representative of at least said hash value, said authenticated user identity, said public key, said signature associated with said digital media item, and a value representative of said storage location of said digital media;
(j) obtaining a time stamp associated with said generation of said blockchain token;
(k) storing said time stamp in said blockchain token;
(l) accessing an unknown digital item provided by a third party;
(m) using at least said hash value to determine if said unknown digital item is a same item as said digital media item or if said unknown digital item is a different digital item; and
(n) notifying the third party if said unknown digital item is said same item as said digital media item or
notifying the third party if said unknown digital item is said different digital item, thereby authenticating said unknown digital item.

2. The method according to claim 1, wherein the user and the third party are a same person.

3. The method according to claim 1, wherein step (l) comprises the steps of:
(11) receiving said unknown digital item from the third party, and
(l2) accessing said unknown digital item.

4. The method according to claim 1, wherein step (m) comprises the steps of;
(m1) calculating a hash value of said unknown digital item,
(m2) if said hash value of said unknown digital item is a same value as said hash value of said digital media item, determining that said unknown digital item is said same item as said digital media item, and
(m4) if said hash value of said unknown digital item is a different value from said hash value of said digital media item, determining that said unknown digital item is a different item from said digital media item.
using at least said hash value to determine if said unknown digital item is a same item as said digital media item or if said unknown digital item is a different digital item; and

5. A method of licensing a digital media item, comprising the steps of:
(a) accessing a digital media item submitted by a user;
(b) calculating a hash value from said digital media item;
(c) receiving authentication of an identify of the user;
(d) generating a cryptographic key pair comprising a public key and a private key;
(e) using at least said private key and said hash value to generate a signature associated with said digital media item;
(f) providing at least said private key to the user;
(g) storing said digital media item in a media database;
(h) storing said digital signature in a signature database;
(i) obtaining from the user at least one license term associated with said digital media item;
(j) storing said at least one license term associated with said digital media item;
(k) receiving from a third party a request to obtain a license to use said digital media item;
(l) providing said at least one license term to the third party;
(m) obtaining from said third party an answer representative of one of an acceptance of said at least one license term or a rejection of said at least one license term;
(n) if said answer is said acceptance,
(n1) licensing said digital media item to said third party according to said at least one license term associated with said digital media item, and,
(n2) communicating said acceptance to the user; and
(o) if said answer is said rejection, either
(o1) communicating said rejection to the user, or
(o2) not communicating said rejection to the user.

6. The method according to claim 5, wherein said media database comprises a blockchain database.

7. The method according to claim 5, wherein said media database comprises a signature database.

8. The method according to claim 5, wherein said media database and said signature database are a same database.

9. The method according to claim 6, wherein said blockchain database is a consortium database.

10. A method of storing a digital media, comprising the steps of:
(a) accessing said digital media item submitted by a user;
(b) calculating a hash value from said digital media item;
(c) receiving authentication of an identify of the user;
(d) generating a cryptographic key pair comprising a public key and a private key;
(f) storing said digital media;
(g) obtaining a value representative of a storage location of said digital media;
(h) obtaining from the user at least one license term associated with said digital media item;
(i) generating a blockchain token containing a plurality of indica representative of at least said hash value, said authenticated user identity, said public key, said at least one license term, said value representative of said storage location of said digital media;
(j) obtaining a time stamp associated with said generation of said blockchain token; and
(k) storing said time stamp in said blockchain token.

11. The method according to claim 10, further comprising:
(l) accessing by a third party said blockchain token;
(m) obtaining by the third party from said blockchain token said at least one license term;
(n) obtaining from said third party an answer representative of one of an acceptance of said at least one license term or a rejection of said at least one license term;
(o) if said answer is said acceptance,
(o1) licensing said digital media item to said third party according to said at least one license term associated with said digital media item,
(o2) communicating said acceptance to the user, and
(o3) updating said blockchain token to reflect that a license to the media item has been granted; and,
(p) if said answer is said rejection, either
(p1) communicating said rejection to the user, or
(p2) not communicating said rejection to the user.

12. The method according to claim 10, further comprising:
(l) accessing by the user said blockchain token;
(m) obtaining from the user at least one indica representative of said identity of the user;
(n) using said at least one indicia representative of said identity of the user to authenticate the user;
(o) obtaining from the user a modified version of said digital media item;
(p) storing said modified digital media item;
(q) calculating a hash value from said modified digital media item;
(r) storing an indica representative of said hash value of said modified digital media item in said block chain;
(s) obtaining another time stamp representative of a time when said modified digital media item was stored in said block chain; and
(t) storing an indicia representative of said another time stamp in said block chain.

13. The method according to claim 10, further comprising:
(l) accessing a questioned digital media item provided by a third party;
(m) calculating a hash value of said questioned digital media item;
(n) obtaining from said blockchain token said indicia representative of said hash value of said digital media item;
(o) using said indicia representative of said hash value of said digital media item to determine if said hash value of said digital media item is the same as said hash value of said questioned digital media item;
(p) if said hash value of said digital media item equals said hash value of said questioned digital media item, indicating to the third party that said unknown digital media item is a same item as said digital media item; and
(q) if said hash value of said digital media item does not equal said hash value of said questioned digital media item, indicating to the third party that said unknown digital media item is a different item than said digital media item.

14. The method according to claim 13, wherein said third party and said user are a same person.

15. The method according to claim 10, wherein said blockchain is a consortium blockchain.
